# EUROPEAN PATENT APPLICATION

(11) **EP 1 065 076 A1**
(43) Date of publication of application: **03.01.2001**
(21) Application number: 00114251.2
(22) Date of filing: 03.07.2000
(51) Int. Cl.: B60C 23/06

(54) **Tire air pressure estimating device**

(30) Priority: 02.07.1999 JP 18935599; 04.10.1999 JP 28269299; 04.10.1999 JP 28269399; 04.10.1999 JP 28269499; 06.10.1999 JP 28541199; 12.05.2000 JP 2000140614
(71) Applicant: Denso Corporation, Kariya-city, Aichi-pref., 448-8661 (JP)
(72) Inventor: Tominaga, Motonori, Nishio-shi, Aichi-ken (JP); Naito, Toshiharu, Kaiya-city, Aichi-pref., 448-8661 (JP); Inoue, Yiuchi, Kaiya-city, Aichi-pref., 448-8661 (JP); Taguchi, Takeyasu, Kaiya-city, Aichi-pref., 448-8661 (JP)
(74) Representative: Winter, Brandl, Fürniss, Hübner, Röss, Kaiser, Polte Partnerschaft

(57) **Abstract**

A tire air pressure is accurately estimated by processing vibrations including vibration components representing a rotational eccentricity of an axle (2) of a vehicle wheel even at a high vehicle running speed.

## Description

The present invention relates to a tire air pressure estimating device for indirectly estimating the air pressure of a tire by carrying out a frequency analysis on a signal generated by typically a wheel speed sensor. More particularly, the present invention relates to improvement of an S/N ratio of the signal generated by the wheel speed sensor by substantially eliminating noise included in the signal in indirect estimation of the air pressure of the tire.

There is known a tire air pressure estimating device whereby variations in rotational speed dependent on the air pressure of a wheel tire are detected by carrying out a frequency analysis on a signal generated by typically a wheel speed sensor as is disclosed for example in JP-A-No. H5-133831. In such a tire air pressure estimating device, a signal generated by a wheel speed sensor for an antilock brake system (ABS) is supplied to an electronic control unit (ECU) as pulses through an ordinary wave shaping circuit to be recognized by the ECU. The pulses are used as a base for reproducing the original analog waveform from which the rotational speed of the wheel is found. A resonance frequency dependent on a spring constant of the tire is directly found by applying an FFT (Fast Fourier Transform) technique or a linear estimation technique to the rotational speed of the wheel reproduced by approximation.

As an alternative, variations in resonance frequency are indirectly found. Such variations are dependent on a spring constant of the tire which is found as an estimated value by applying a disturbance observer technique or the like. As described above, the resonance frequency dependent on the air pressure of the tire or an equivalent quantity of the resonance frequency is computed to find the current air pressure of the tire which is then compared with the normal air pressure of the tire obtained at an initial time. If the result of the comparison indicates a decrease in tire air pressure, a warning is given to the driver.

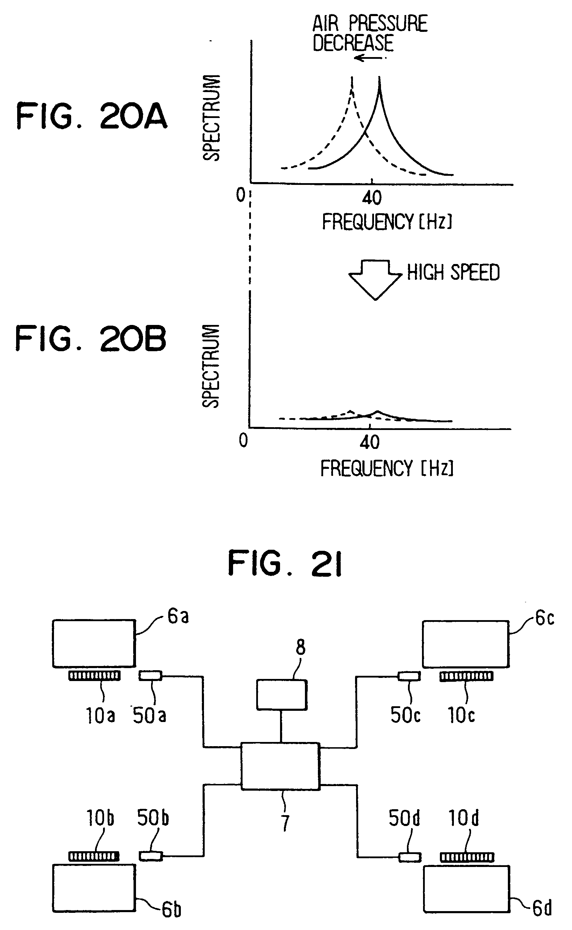

In a device for estimating the air pressure of a tire by carrying out such a frequency analysis, a decrease in tire air pressure is detected as a change in a resonance frequency of a tire spring unit from about 40 Hz as indicated by a shift from a solid line to a dashed line shown in Fig. 20A and 20B. Such a decrease can then be used to estimate the air pressure of the tire itself.

At a vehicle speed not exceeding about 60 Km/h, the gain of the frequency spectrum of an observed signal is large as shown in Fig. 20A. In this case, a change in air pressure of the tire can be estimated satisfactorily from a variation in resonance frequency. At a vehicle speed exceeding about 60 Km/h, on the other hand, the gain of the frequency spectrum of the observed signal is small as shown in Fig. 20B. In this case, it is quite within the bounds of possibility that the air pressure of the tire is difficult to estimate particularly at a high vehicle speed.

In addition, the wheel speed sensor used in such a tire air pressure estimating device is provided on an axle housing of the vehicle. Attached to lower and upper arms, the axle housing experiences propagation of a vibration of a propeller shaft, a drive shaft and a differential. In addition, the wheel speed sensor is installed to face a rotor which exhibits projections or has slits on the circumferential surface thereof. The rotor is attached to an axle or a member which rotates along with the axle. The axle housing thus vibrates in accordance with a vibration of an unsprung which is inherent in the vehicle and accompanies a suspension vibration and the like. Accordingly, the wheel speed sensor itself also vibrates inevitably in accordance with the vibration of the unsprung. The vibration of the wheel speed sensor itself appears as noise in a signal generated by the sensor, raising a problem of a decreased S/N ratio of the signal.

It is thus an object of the present invention to provide a tire air pressure estimating device capable of estimating the air pressure of a tire with a high degree of accuracy even at a high vehicle speed.

As a first means for solving the problems described above, the present invention provides a tire air pressure estimating device for estimating the air pressure of a tire or detecting a change in air pressure of the tire by utilizing eccentricity of the shaft center of a wheel. At a high vehicle speed, the eccentricity of the shaft center of a wheel vibrates at a large amplitude. The tire pressure estimating device implements estimation of the air pressure of a tire or detection of a change in air pressure of the tire based on a relation between a vibration component caused by eccentricity and the air pressure of the tire.

It should be noted that the vibration component caused by the eccentricity of an axle can be extracted by carrying out a frequency analysis on a signal generated by a wheel speed sensor, or by observing a force applied to an axle, a displacement or an acceleration of the axle or a phenomenon which represents the force, the displacement or the acceleration and occurs in the structure of the axle itself or a structure surrounding the axle.

It is another object of the present invention to effectively prevent the S/N ratio of a signal generated by a vibration of the wheel speed sensor itself from deteriorating.

As a second means for solving the problems described above, the present invention provides: a waviness-component extraction means for extracting a waviness component of a vibration of a signal generated by the wheel speed sensor; and a component separation means for separating noise included in a signal output due to a rotational vibration of the wheel speed sensor itself from the signal.

It is thus possible to separate an inherent noise component caused by an error of installation of the wheel speed sensor and a noise component included in a signal generated by the wheel speed sensor due to the rotational vibration of the wheel speed sensor itself attributed to an accidental suspension vibration or the like.

As an alternative, two wheel speed sensors facing each other are provided on an axle housing serving as a place for installing wheel speed sensors. The air pressure of the tire is then found from a value of synthesis of signals output by the two wheel rotation sensors. In this scheme, a rotational vibration noise component included in a signal generated by one of the two wheel rotation sensors cancels a rotational vibration noise component included in a signal generated by the other wheel rotation sensor because of the same phase. In addition, an eccentricity component output as a signal by one of the two wheel rotation sensors enforces an eccentricity component output as a signal by the other wheel rotation sensor due to their more or less mutually opposite phases. As a result, the magnitude of the output eccentricity component is doubled to give an improved S/N ratio.

As another alternative, it is also possible to provide: a vibration detection sensor for detecting a vibration of an unsprung of the vehicle; a noise-component estimating means for estimating a noise component caused by a vibration of a wheel rotation sensor itself at the position of the wheel rotation sensor from a signal generated by the vibration detection sensor; and a noise correction means for adding the noised component estimated by the noise-component estimating means to a signal generated by the wheel rotation. sensor.

In this scheme, a noise a vibration component at the position of the wheel rotation sensor is estimated from a noise component at the position of the wheel rotation sensor, and a noise component included in a signal generated by the wheel rotation sensor and caused by a rotational vibration of the wheel rotation sensor can be eliminated in a time or frequency domain.

As a further alternative, an axle on which a rotor of a wheel rotation sensor provided is magnetized so that a variation in magnetic flux caused by eccentricity of the rotor relative to the wheel rotation sensor is magnified by a magnetic flux of an axle and the behavior of an output signal is thus increased in comparison with a noise component. As a result, the S/N ratio of a signal generated by the wheel rotation sensor is improved.

As a third means for solving the problems described above, a signal component in a radial component of a rotor, which is installed to face a wheel rotation sensor and rotates along with an axle, is increased in a signal generated by the wheel rotation sensor in estimation of the air pressure of a tire by detecting the signal generated by the wheel rotation sensor. The air pressure of the tire is estimated by extracting a vibration component attributed by a spring constant of the tire from the signal generated by the wheel rotation sensor and computing the resonance frequency of the tire. The vibration component attributed by a spring constant of the tire is a vibration component in the radial direction of the rotor as represented by the forward/backward directions or the upward/downward directions of the wheel. On the other hand, a vibration component caused by a vibration of the wheel rotation sensor itself in the rotational direction of the rotor due to suspension a vibration or the like becomes noise in the estimation of the air pressure of the tire. Thus, if the vibration in the radial direction of the rotor in the signal generated by the wheel rotation sensor is increased, the component used in the estimation of the air pressure of the tire is magnified rather than the noise component of the signal generated by the wheel rotation sensor is. As a result, the S/N ratio is raised.

In addition, by vibrating a coil in the wheel rotation sensor in the radial direction of the rotor, the vibration in the radial direction of the rotor, that is, a vibration component depending on a spring constant of the tire, can be increased with ease.

By the same token, a permanent magnet on the wheel rotation sensor can also be vibrated.

Furthermore, instead of increasing the vibration in the radial direction of the rotor (that is, a vibration component depending on a spring constant of the tire) by vibrating the internal structure of the wheel rotation sensor itself, there is provided a magnetic vibration system having a permanent magnet movable in the radial direction of the rotor at a location in close proximity to the wheel rotation sensor. With such a magnetic a vibration system, a magnetic flux varying with a vibration of the permanent magnet in the magnetic a vibration system has an effect on the coil of the wheel rotation sensor. As a result, the vibration in the radial direction of the rotor, that is, a vibration component depending on a spring constant of the tire, can be increased.

As a fourth means for solving the problems described above, in the air pressure of the tire estimating device provided by the present invention, a wheel rotation sensor is provided at a position in close proximity to a virtual center of rotation of the axle housing by consideration of the phases and the amplitudes of support points for an arm on the vehicle-body side of the axle housing.

To be more specific, by considering the amplitude at a support point supporting the axle housing with the wheel rotation sensor provided thereon and differences in phase among support points, a locus of a rotational vibration of the axle housing can be predicted. If the wheel rotation sensor is installed at a position with a minimum amplitude of the a rotational vibration of the axle housing, that is, if the wheel rotation sensor is installed at the rotational center of the axle housing, the magnitude of a vibration propagated to the wheel rotation sensor can be reduced to a minimum and the amount of noise included in a signal output by the wheel rotation sensor can be decreased most.

As a fifth means for solving the problems described above, a vibration of a driving system comprising a propeller shaft, a drive shaft, an axle housing and a differential is detected, and a vibration component becoming noise in the estimation of the air pressure of the tire in the vibration is identified. Thus, the air pressure of the tire can be estimated by taking the noise component into account. As a result, the precision of the air pressure estimation can be improved.

In addition, an acceleration sensor can be used for detecting a vibration of the driving system. Furthermore, by using an acceleration sensor employed in another device such as an anti-skid device or a car-body behavior control device as the acceleration sensor for detecting a vibration of the driving system, a cost increase caused by the use of a tire air pressure estimating device in a vehicle can be reduced considerably. It should be noted that there are many types of car in which the acceleration sensor used in another device such as an anti-skid device or a car-body behavior control device is installed on a mount portion of the differential so that the vibration of the driving system can be detected as a vibration at a position in close proximity to the mount portion of the differential. Thus, the use of the acceleration sensor employed in such another device as the acceleration sensor for the tire air pressure estimating device is very suitable.

It should be noted that, by detecting a vibration of the driving system using a detection means and identifying it using an identification means, noise in estimation of the air pressure of a tire can be identified with a high degree of efficiency.

Other features and advantages of the present invention will be appreciated, as well as methods of operation and the function of the related parts, from a study of the following detailed description, the appended claims, and the drawings, all of which form a part of this application. In the drawings:
Fig. 1 is a model diagram showing a periphery of a wheel rotation sensor provided by a first embodiment;
Fig. 2 is a diagram showing a cross section II-II shown in Fig. 1;
Fig. 3 is a flowchart representing a process of estimating a change in tire air pressure;
Fig. 4 is a diagram showing a positional relation between a sensor and eccentricity of an axle or a rotor;
Fig. 5 is a diagram showing a positional relation between a sensor and eccentricity of an axle or a rotor;
Fig. 6 is a diagram showing a cross section VI-VI of Fig. 1 illustrating a bearing that serves as a principal cause of eccentricity of an axle or a rotor;
Fig. 7 is a diagram showing a deformed shape of a bearing that serves as a principal cause of eccentricity of a rotor or an axle;
Figs. 8A and 8B are diagrams showing a moving state of the rotational center of a rotor in a high-speed range;
Figs. 8C and 8D are diagrams each showing spectra each peaked at a resonance frequency resulting from movements shown in Figs. 8A and 8B;
Fig. 9 is a diagram showing a positional relation ship between a movement of the rotational center of a bearing and a sensor;
Fig. 10 is a diagram showing the waveform of a signal output by a wheel rotation sensor in a state with a rotational center of a bearing existing;
Fig. 11 is a diagram showing a relation between the air pressure of a tire and a change in resonance frequency caused by a displacement of the rotational center of an axle or a rotor in a high-speed range;
Fig. 12 is a model diagram showing a periphery of a wheel rotation sensor provided by another embodiment;
Fig. 13 is a diagram showing a cross section XIII-XIII shown in Fig. 12;
Fig. 14 is a model diagram showing a periphery of a wheel rotation sensor provided by still another embodiment;
Fig. 15 is a diagram showing a cross section XV-XV shown in Fig. 14;
Fig. 16 is a model diagram showing a periphery of a wheel rotation sensor provided by still another embodiment;
Fig. 17 is a model diagram showing a periphery of a wheel rotation sensor provided by a further embodiment;
Fig. 18 is a model diagram showing a periphery of a wheel rotation sensor provided by a still further embodiment;
Fig. 19 is a model diagram showing a periphery of a wheel rotation sensor provided by a still further embodiment;
Fig. 20A is a characteristic diagram showing variations in resonance frequency used in determination of the air pressure of a tire using a resonance frequency at low and medium speeds in the conventional device;
Fig. 20B is a characteristic diagram showing variations in resonance frequency used in determination of the air pressure of a tire using a resonance frequency in a high-speed range in the conventional device;
Fig. 21 is a block diagram showing the configuration of a second embodiment of the present invention;
Fig. 22 is a configuration diagram showing main components composing the present invention;
Fig. 23A is a diagram showing the waveform of a spectrum peaked at a resonance frequency with no noise included in a signal generated by a wheel rotation sensor;
Fig. 23B is a diagram showing the waveform of a spectrum peaked at a resonance frequency with noise caused by the rotation of a wheel rotation sensor;
Fig. 23C is a diagram showing the waveform of a spectrum peaked at a resonance frequency obtained as a result of synthesizing the spectrum peaked at a resonance frequency with no noise and the spectrum peaked at a resonance frequency with noise;
Fig. 24A is a diagram showing a sinusoidal waveform of a signal output by a wheel rotation sensor;
Fig. 24B is a diagram showing a pulsative waveform obtained as a result of reshaping of the sinusoidal waveform shown in Fig. 24A;
Fig. 25 is a characteristic diagram showing a typical waveform of a signal output by a wheel rotation sensor in a high-speed range;
Fig. 26 is a characteristic diagram showing an output signal of a wheel rotation sensor including noise caused by a rotational vibration of the wheel rotation sensor itself;
Fig. 27A is a diagram showing a pulsative waveform obtained as a result of reshaping of an output signal accompanying eccentricity caused by a phase displacement of a wheel rotation sensor relative to a rotor;
Fig. 27B is a diagram showing a pulsative waveform obtained as a result of reshaping of the waveform of noise caused by a rotational vibration of the wheel rotation sensor itself;
Fig. 27C is a diagram showing period variations ΔT in the waveforms shown in Figs. 17A and 27B;
Fig. 28A is a diagram showing a pulsative waveform obtained as a result of reshaping of an output signal accompanying eccentricity caused by a phase displacement of a wheel rotation sensor relative to a rotor;
Fig. 28B is a diagram showing a curve representing ΔTL /ΔTH where the symbols ΔTL and ΔTH denote periods of the waveform shown in Fig. 28A;
Fig. 28C is a diagram showing a pulsative waveform obtained as a result of reshaping of the waveform of noise caused by a rotational vibration of the wheel rotation sensor itself;
Fig. 28D is a diagram showing a curve representing ΔTL /ΔTH where the symbols ΔTL and ΔTH denote periods of the waveform shown in Fig. 28C;
Fig. 29 is a diagram showing the configuration of a first modified version of the second embodiment;
Fig. 30 is a diagram showing the configuration of a second modified version of the second embodiment;
Fig. 31 is a flowchart representing a time interpolation process in the second modified version of the second embodiment;
Fig. 32 is a flowchart representing a process of correcting a waveform in the second modified version of the second embodiment;
Fig. 33A is a diagram showing a result of applying the FFT to an output signal of a wheel rotation sensor including noise caused by a rotational movement of a wheel rotation sensor itself;
Fig. 33B is a diagram showing the waveform of a signal output by a height sensor;
Fig. 33C is a diagram showing the waveform of a signal output by a height sensor with no band-pass filter;
Fig. 33D is a diagram showing a correction waveform indicating noise at the position of a height sensor based on a signal output by the height sensor;
Fig. 33E is a diagram showing a waveform obtained as a result of subtracting the waveform shown in Fig. 33D from the waveform shown in Fig. 33A;
Fig. 34 is a diagram showing the configuration of a third modified version of the second embodiment;
Fig. 35A is a diagram showing the state of eccentricity in which a rotor has most closely approached a wheel rotation sensor;
Fig. 35B is a diagram showing the state of eccentricity in which a rotor has departed farthest from a wheel rotation sensor;
Fig. 36A is a diagram showing the configuration of a mechanism for detecting the air pressure of a tire;
Fig. 36B is a diagram showing an effect of a vibration component in the back & forth direction (or the X direction) of the vehicle on a characteristic of a resonance frequency;
Fig. 36C is a diagram showing an effect of a vibration component in the up & down direction (or the Y direction) of the vehicle on a characteristic of a resonance frequency;
Fig. 37 is a diagram showing a wheel rotation sensor employed in a third embodiment;
Fig. 38 is a diagram showing a wheel rotation sensor employed in a first modified version of the third embodiment;
Fig. 39 is a diagram showing a wheel rotation sensor employed in a second modified version of the third embodiment;
Fig. 40 is a diagram showing main elements employed in the configuration of a fourth embodiment;
Fig. 41 is a diagram showing a technique of determining an optimum position β among installation positions of a wheel rotation sensor;
Fig. 42 is a diagram showing a technique of determining an optimum position β among installation positions of a wheel rotation sensor;
Fig. 43 is a diagram showing a technique of determining an optimum position β among installation positions of a wheel rotation sensor;
Fig. 44 is a diagram showing a technique of determining an optimum position β among installation positions of a wheel rotation sensor;
Fig. 45A is a diagram showing a technique of determining an optimum position β among installation positions of a wheel rotation sensor;
Fig. 45B is a diagram showing a locus of an axle housing with the phase changing from 0 degrees to 90 degrees;
Fig. 46A is a diagram showing a technique of determining an optimum position β among installation positions of a wheel rotation sensor;
Fig. 46B is a diagram showing a locus of an axle housing with the phase changing from 90 degrees to 180 degrees;
Fig. 47 is a diagram showing another modified version of the fourth embodiment;
Fig. 48 is a block diagram showing the configuration of a fifth embodiment of the present invention;
Fig. 49A is a diagram showing the waveforms of spectra each peaked at a resonance frequency with no noise included in a signal generated by a wheel rotation sensor;
Fig. 49B is a diagram showing the waveform of a spectrum peaked at a resonance frequency with noise generated by a driving system;
Fig. 49C is a diagram showing the waveform of a spectrum peaked at a resonance frequency and obtained as a result of a synthesis of the spectra with and without noise;
Fig. 50A is a diagram showing a vibration model of a driving system;
Fig. 50B is a diagram showing a suspension windup vibration;
Fig. 50C is a diagram showing a bending primary vibration;
Fig. 50D is a diagram showing a torsional quaternary vibration of a propeller shaft;
Fig. 51 is a flowchart representing a time correction process;
Fig. 52 is a flowchart representing a process of correcting a waveform;
Fig. 53A is a diagram showing a result of applying the FFT to an output signal of a wheel rotation sensor including noise caused by a rotational movement of a wheel rotation sensor itself;
Fig. 53B is a diagram showing the waveform of a signal output by an acceleration sensor;
Fig. 53C is a diagram showing the waveform of a signal output by an acceleration sensor with no band-pass filter;
Fig. 53D is a diagram showing a correction waveform indicating noise at the position of an acceleration sensor based on a signal output by the acceleration sensor; and
Fig. 53E is a diagram showing a waveform obtained as a result of subtracting the waveform shown in Fig. 53D from the waveform shown in Fig. 53A.

A first embodiment of the present invention is explained by referring to diagrams as follows.

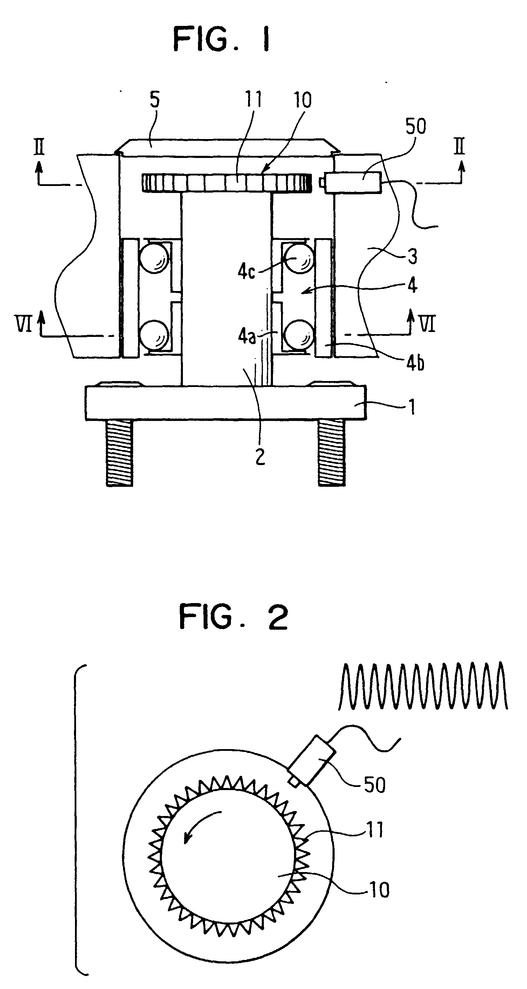

Fig. 1 is a diagram showing the periphery of the shaft of a wheel employed in a vehicle having an ABS device. A tire (not shown in the figure) is fixed on an axle hub 1 in such a way that the tire can be rotated by a bearing 4 having a ball 4c along with an axle 2. An axle housing 3 is provided on an outer lace 4b of the bearing 4, being fixed on the car body by typically a steering knuckle which is not shown in the figure either.

A rotor 10 of a wheel rotation sensor 100 is fixed on an inner lace 4a of the bearing 4. On the edge of the rotor 10, slits or projections 11 are created to serve as members each used for generating changes in magnetic flux. A sensor unit 50 of the wheel rotation sensor 100 is fixed on the outer lace 4b. The sensor unit 50 comprises a permanent magnet, an electromagnetic pickup, a coil and a terminal which are not shown in the figure. The sensor unit 50 transmits a generation current accompanying a change in magnetic flux through the terminal to an ECU which is also not shown in the figure. It should be noted that a cover 5 is provided on the end of the axle 2 or on the outer side of the rotor 4. The cover 5 veils the axle 2.

A cross section II-II crossing the rotor 10 and the sensor unit 50 as shown in Fig. 1 is shown in Fig. 2.

The distance between a protrusion 11 and the electromagnetic pickup of the sensor unit 50 facing the protrusion 11 changes as the rotor 10 rotates. When the distance changes, a current generated in a coil embedded in the sensor unit 50 also changes. The changes in such current are output as a signal representing the rotational speed of the wheel.

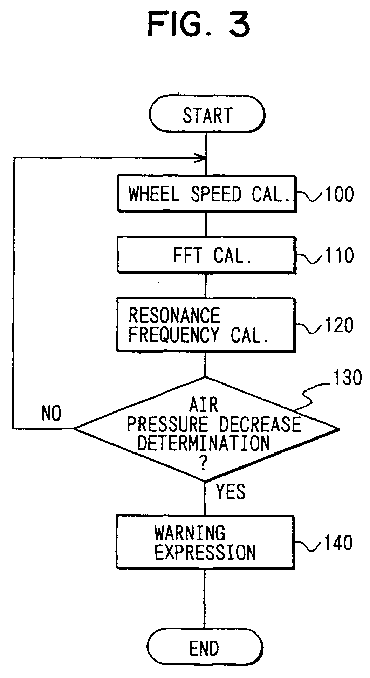

Processing to estimate a decrease in tire air pressure by using the output of the wheel rotation sensor 100 with the configuration described above is explained by referring to a flowchart shown in Fig. 3.

As shown in the figure, the flowchart begins with a step 100 at which pulses to be used in calculation of the rotational speed of the wheel are input, and processing such as reshaping of a waveform is carried out. Then, at a next step 110, Fast-Fourier Transform processing is carried out on a signal representing the rotational speed of the wheel found at the step 100. Subsequently, at the next step 120, frequencies of resonance attributed to a spring constant of the tire is found. For a normal air pressure of the tire at a low or medium vehicle speed in the range 0 to 60 Km/h, a large spectrum peaked at resonance frequencies of about 40 Hz and 80 Hz is observed. The resonance frequencies are frequencies of resonance attributed to a spring constant of the carcass of the tire. In particular, the output level at the resonance frequency of 80 Hz at a low speed is very low. It should be noted that the resonance frequencies of about 40 Hz and about 80 Hz are frequencies of a phenomenon of resonance between an introduced vibration caused by roughness of the surface of a road exposed to the spring of the tire or the carcass of the tire, and a vibration inherent in the tire. The resonance frequency of about 40 Hz is the frequency of a primary resonance in the rotational direction of the tire. On the other hand, the resonance frequency of about 80 Hz is the frequency of a secondary resonance also in the rotational direction of the tire.

At the step 120, resonance frequencies in a high-speed region are found. For a normal air pressure of the tire at a high vehicle speed in the range 60 to 240 Km/h, a spectrum peaked at resonance frequencies of about 70 Hz and/or 95 Hz is observed. As will be described later in detail, the resonance frequencies of about 70 Hz and 95 Hz are frequencies of resonance a resonance vibration based on an eccentricity phenomenon of a rotational center of the axle 2 or the rotor 10 caused by variations in tire air pressure. It should be noted that the reason why there are two resonance frequencies of 70 Hz and 95 Hz is that the resonance frequency in the back & forth direction of the vehicle is different from the resonance frequency in the up & down direction. That is, the resonance frequency in the back and forth movements in the radial direction of the wheel is different from the resonance frequency in the up and down movements in the radial direction of the wheel. Thus, in the wheel rotation sensor of the ABS device, a compound vibration of the two vibration elements exists. It should be noted that the up & down and back & forth resonance frequencies are used for the sake of convenience because, in a resonance-frequency analysis, two axial sensors are simply installed on the car body by orienting the X-Y axes in the up & down and back & forth directions. Thus, the up & down and back & forth directions can be changed in accordance with the vector direction in the resonance-frequency analysis.

In this way, the technique of finding frequencies of resonance dependent on the air pressure of a tire is changed. To be more specific, for low and medium speeds, frequencies of resonance between an introduced vibration caused by roughness of the surface of a road and a vibration inherent in the spring of the tire are used. In the high-speed range, on the other hand, frequencies of resonance between an eccentricity vibration of an axle and a vibration inherent in the spring of the tire are used.

It should be noted that the frequencies of both the resonance between an introduced vibration caused by roughness of the surface of a road and a vibration inherent in the spring of the tire and the resonance between an eccentricity vibration of an axle and a vibration inherent in the spring of the tire can also be found for all cases without regard to the speed of the vehicle. Then, resonance frequencies to be used are selected in accordance with the speed of the vehicle. In this case, the commonly known speed of the vehicle used in the ABS device can be utilized for selection of resonance frequencies. In should be noted that, instead of detecting the speed of the vehicle in this way, comparing the detected speed of the vehicle with a criterion value of typically 60 Km/h and determining which resonance is to be used for selecting resonance frequencies, the magnitudes of power spectra of resonance frequencies found from both the two resonance phenomena are considered to determine which resonance frequencies are more accurate, that is, to select more accurate resonance frequencies indicated by larger power spectra. Then, a resonance phenomenon is determined as a base for estimation of the air pressure of a tire.

At a step 130, a decrease in tire air pressure is determined based on a resonance frequency found at the step 120.

Assume that the speed of the vehicle is 60 Km/h or lower. In this case, the resonance frequencies are frequencies of resonance between an introduced vibration caused by roughness of the surface of a road and a vibration inherent in the spring of the tire. Resonance-frequency criterion values for estimating the air pressure of a tire are 40 Hz and 80 Hz. The frequency of 40 Hz is a criterion value for the primary resonance and the frequency of 80 Hz is a criterion value for the secondary resonance. Assume that resonance frequencies found at the step 120 are 35 Hz for the primary resonance component and 75 Hz for the secondary resonance component. In this case, the resonance frequency of 35 Hz is compared with the criterion value of 40 Hz and the resonance frequency of 75 Hz is compared with the criterion value of 80 Hz. A resonance frequency smaller than the criterion value by a difference of typically 5Hz or greater indicates a decrease in tire air pressure.

Assume that the speed of the vehicle is higher than 60 Km/h. In this case, the resonance frequencies are frequencies of resonance between an eccentricity vibration of an axle and a vibration inherent in the spring of the tire. Resonance-frequency criterion values for estimating the air pressure of a tire are about 70 Hz and about 95 Hz. The frequency of about 70 Hz is a criterion value in the up & down direction of the tire relative to the car body, and the frequency of about 95 Hz is a criterion value in the back & forth direction. Assume that resonance frequencies found at the step 120 are 65 Hz in the up & down direction and 90 Hz in the back & forth direction. In this case, the resonance frequency of 65 Hz is compared with the criterion value of about 70 Hz and the resonance frequency of 90 Hz is compared with the criterion value of about 95 Hz. A resonance frequency smaller than the criterion value by a difference of typically 5Hz or greater indicates a decrease in tire air pressure.

It should be noted that, instead of estimating a decrease in tire air pressure from a difference between the resonance-frequency criterion value and a resonance frequency found at the step 120, a decrease in tire air pressure at the present point of time can also be estimated from the resonance frequencies themselves which are found at the step 120. An air pressure of a tire lower than an air-pressure criterion value of typically 2.0 kgf/cm² by a difference of 0.3 atm is determined to be a decrease in tire air pressure.

If a decrease in tire air pressure is determined to exist, the driver is informed at a step 140 by turning on a lamp, operating a buzzer or the like.

The following description explains a principle of utilizing a resonance phenomenon based on a rotational variation component of the axle 2 for a high speed of the vehicle at which the output levels at resonance frequencies close to 40 Hz for the primary resonance and 80 Hz for the secondary resonance drop.

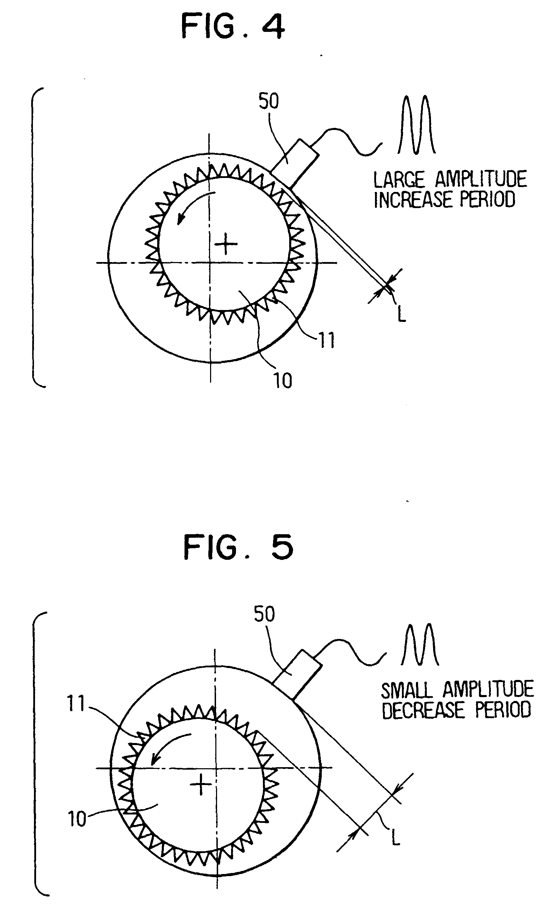

As will be described later, when the inner lace 4a or the like of the bearing 4 is deformed due to typically elastic deformation of the ball 4c, the gap L between the sensor unit 50 and the rotor 10 as shown in Figs. 4 and 5. To put it in detail, when the rotor 10 is put at an eccentric position on the right-upper side of Fig. 4, the gap L between the projections 11 of the rotor 10 and the sensor 50 decreases. When the rotor 10 is put at an eccentric position on the left-lower side as shown in Fig. 5, on the other hand, the gap L between the projections 11 of the rotor 10 and the sensor unit 50 increases.

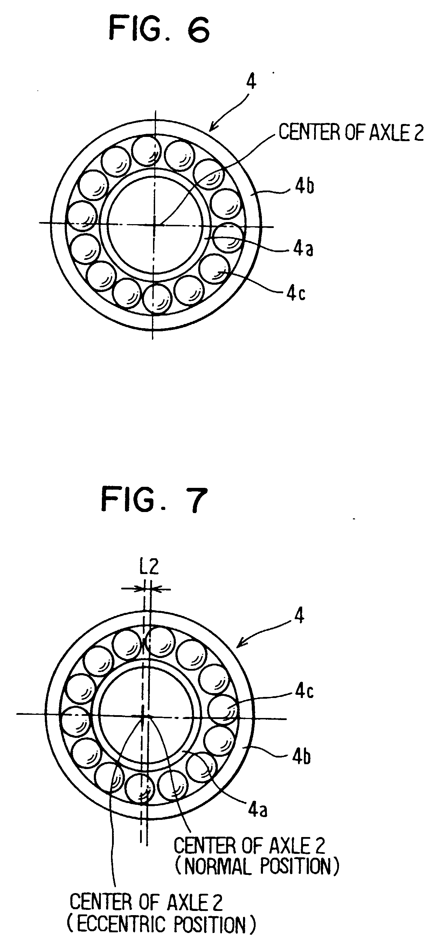

The above phenomena occur when a state shown in Fig. 6 changes to a state shown in Fig. 7. Fig. 6 is a diagram showing a state in which the axial center of the axle 2 coincides with the rotational center of the bearing 4 due to the fact that components such as the interlace 4a and the ball 4c of the bearing 4 are in a normal state of not being deformed or the like. On the other hand, Fig. 7 is a diagram showing a state in which, concretely, the rotational center of the bearing 4 is put at an eccentric position with respect to the rotational center of the axle 2 by a gap of L2 due to the fact that the inner lace 4a or the like of the bearing 4 is deformed due to typically elastic deformation of the ball 4c.

The eccentricity of the rotational center of the bearing 4 described above occurs at a high speed of the vehicle when the rotational speed of the outer lace 4b relative to the inner lace 4a of the bearing 4b increases. This phenomenon was discovered by the applicant for a patent of the present invention through diligent research. For example, such eccentricity occurs at a high speed of the vehicle, that is, when the speed of the vehicle exceeds 60 km/h. At a vehicle speed not lower than 120 km/h along typically an Auto-bahn in a foreign country, for example, the output level at a resonance frequency close to 40 Hz decreases substantially. It was discovered, however, that the eccentricity of the rotational center of the bearing 4 is capable of allowing a sufficiently high output level to be generated at a resonance frequency different from 40 Hz. The discovery was a result of an analysis of acceleration behaviors at the axle housing 3 or an analysis based on measurements of a shaft force typically by using a component-force meter.

In the state of such eccentricity of the rotational center of the bearing 4 shown in Fig. 4 or 5, the amplitude of the sinusoidal waveform of the order of L^{1.5} (where the symbol L denotes the distance between the projections 11 of the rotor 10 and the sensor unit 50) changes subtly in comparison with the sinusoidal waveform of a signal representing the rotational speed of the wheel picked up by the electromagnetic pickup as shown in Fig. 2 depicting a normal state. That is, in the case of the state shown in Fig. 4, the amplitude and the period of the signal representing the rotational speed of the wheel increase in comparison with the normal state shown in Fig. 2. In the case of the state shown in Fig. 5, on the other hand, the amplitude and the period of the signal representing the rotational speed of the wheel decrease in comparison with the normal state shown in Fig. 2.

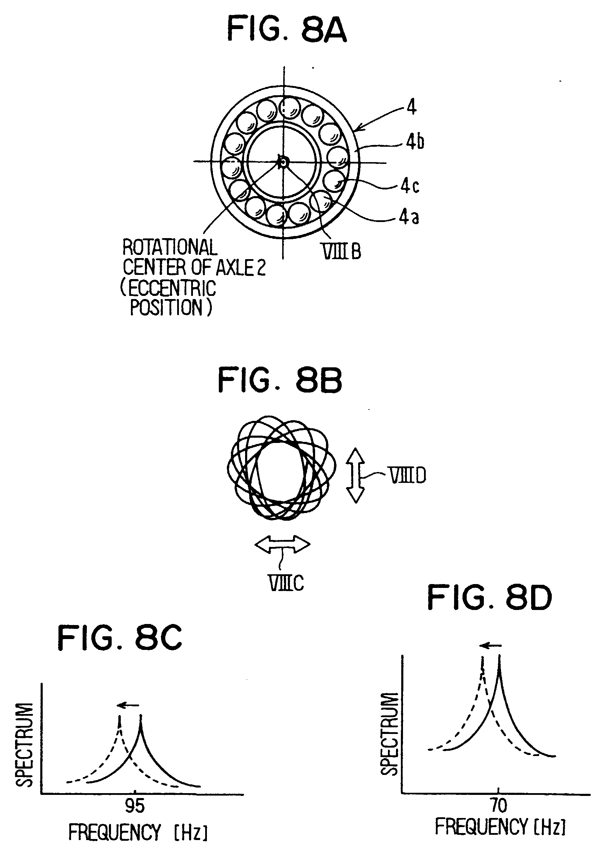

A state of superposition of the phenomenon shown in Fig. 4 on that shown in Fig. 5 is shown in Fig. 8. With the rotational center of the bearing 4 put at an eccentric position, at a high speed of the vehicle, the position of the rotational center of the axle 2 shown in Fig. 8A changes in accordance with loci each resembling a spiral as shown in Fig. 8B which is an enlarged diagram depicting the axle 2. Movements of the position of the rotational center of the axle 2 are measured from two angles, that is, in two directions different from each other by 90 degrees. The two directions are an up & down direction and a left-right direction shown in Figs. 8B, 8C and 8D. In a state of a normal air pressure of a radial tire employed in a passenger car, a resonance frequency of 95 Hz is obtained for the angle of the up & down direction as shown by a solid line in Fig. 8C. For the angle of the left-right direction, on the other hand, a resonance frequency of 70 Hz is obtained as shown by a solid line in Fig. 8D. The resonance frequencies themselves, which are 70 Hz and 95 Hz in the normal state of the air pressure of the tire, change in accordance with the air pressure of the tire. To be more specific, when the air pressure of the tire drops from the value in the normal state, the resonance frequency for the angle of the up & down direction decreases from 95 Hz as shown by a change from a solid line to a dashed line in Fig. 8C. By the same token, the resonance frequency for the angle of the left-right direction decreases from 70 Hz as shown by a change from a solid line to a dashed line in Fig. 8D. For example, the resonance frequency in the back & forth direction of the vehicle changes from 95 Hz to 80 Hz while the resonance frequency in the left-right direction of the vehicle changes from 70 Hz to 60 Hz. That is, the amount and the period of the elastic deformation of the ball 4c or the like employed in the bearing 4 are changed by a variation in tire air pressure. Thus, the amount of eccentricity or the period of eccentricity of the rotational center of the bearing 4 vary in a range corresponding to a frequency range of about 60 Hz to 120 Hz. In this case, the rotational center of the axle 2 is also put at an eccentric position with its amount of eccentricity or its period of eccentricity varying in the same way. Due to such an effect, the gap between the sensor unit 50 and the projections 11 of the rotor 10 varies. The gap variations are conveyed by a signal generated by the wheel rotation sensor 100 as changes in amplitude and/or period.

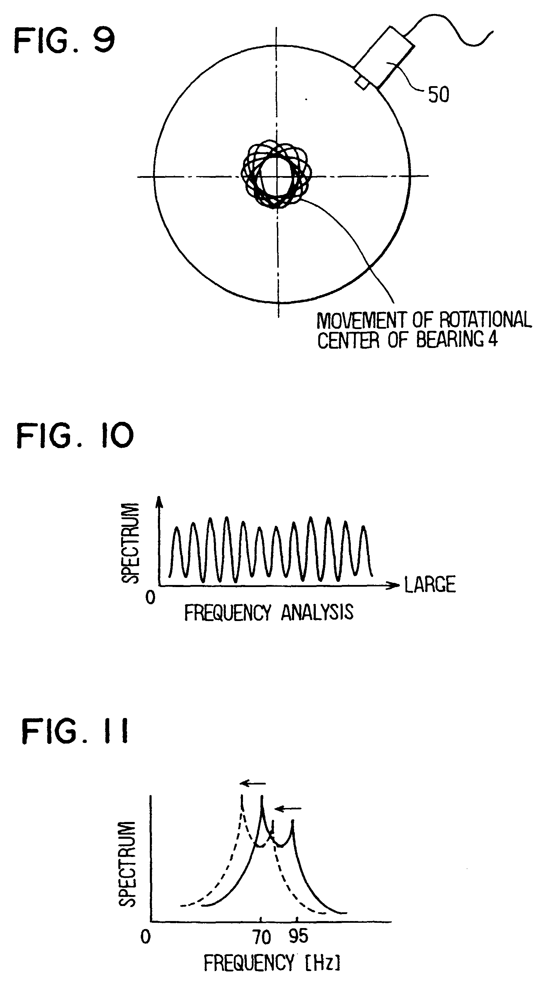

Such a phenomenon can be observed from a signal generated by the wheel rotation sensor 100. Typical signals generated by the wheel rotation sensor 100 are explained by referring to Figs. 9 to 11.

Fig. 9 is a diagram showing movements of the rotational center of the bearing 4 (or the rotational center of the rotor 10) relative to the sensor unit 50 of the wheel rotation sensor 100 with the lapse of time at a high speed of the vehicle. Much like the movements shown in Fig. 8B, the rotational centers move along loci each resembling a spiral.

Fig. 10 is a diagram showing a signal which represents the rotational speed of a wheel and is picked up by an electromagnetic pickup when the rotational center of the rotor 10 moves. As shown in the figure, the waveform of the signal includes changes caused by movements of the rotational center attributed to eccentricity of the bearing 4 of the rotor 10.

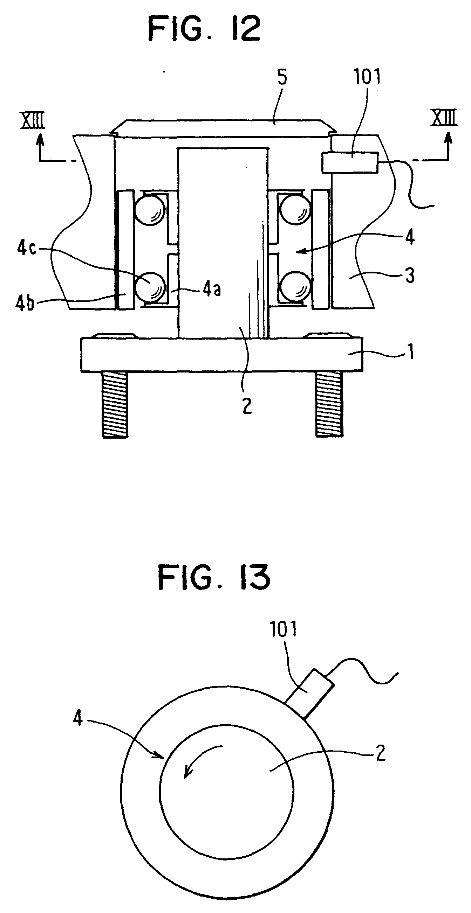

Fig. 11 is a diagram showing results of a frequency analysis such as the FFT (Fast Fourier Transform) processing carried out on the signal representing the rotational speed of a wheel like one shown in Fig. 10. A solid-line curve shown in Fig. 11 represents a resonance waveform for a normal air pressure. When the air pressure decreases, however, the resonance frequencies become lower as indicated by a dashed-line curve.

As described above, in accordance with the present invention, the air pressure of a tire can be detected or estimated indirectly at a high speed of the vehicle by using a phenomenon of a varying period of eccentricity of the rotor 10, that is, a varying period of eccentricity of the axle 2. As described above, the period of eccentricity of the rotor 10 changes at a high speed of the vehicle due to the eccentricity of the bearing 4. Thus, indirect estimation of the air pressure of a tire can be implemented by using resonance frequencies not only at low and medium speeds of the vehicle, but also in a high-speed range. It should be noted that the detection and/or the estimation of the air pressure of a tire can be implemented by carrying out an analysis based on software without providing a new actuator for estimating the air pressure of a tire. As is obvious from the embodiment described so far, this technique can be applied to a vehicle employing an anti-skid control device by monitoring a signal generated by the wheel rotation sensor 100 installed on each wheel in almost all vehicles over the entire speed range, from a practical lower limit of about 10 Km/h to an upper limit permitted by a law.

A variety of changes and modifications can be made to the embodiment described above as follows.

In the embodiment described above, for example, a signal generated by a wheel rotation sensor having an electromagnetic-pickup type to represent the rotational speed of a wheel is subjected to a frequency analysis. In addition to this technique, eccentricity of the rotor 10 or the axle 2 can also be detected at a high speed of the vehicle by measuring the eccentricity of the rotor 10 and the axle 2 from a signal generated by a general-purpose displacement sensor 101 of typically a laser type or an eddy-current type shown in Figs. 12 and 13 and analyzing results of the measurement.

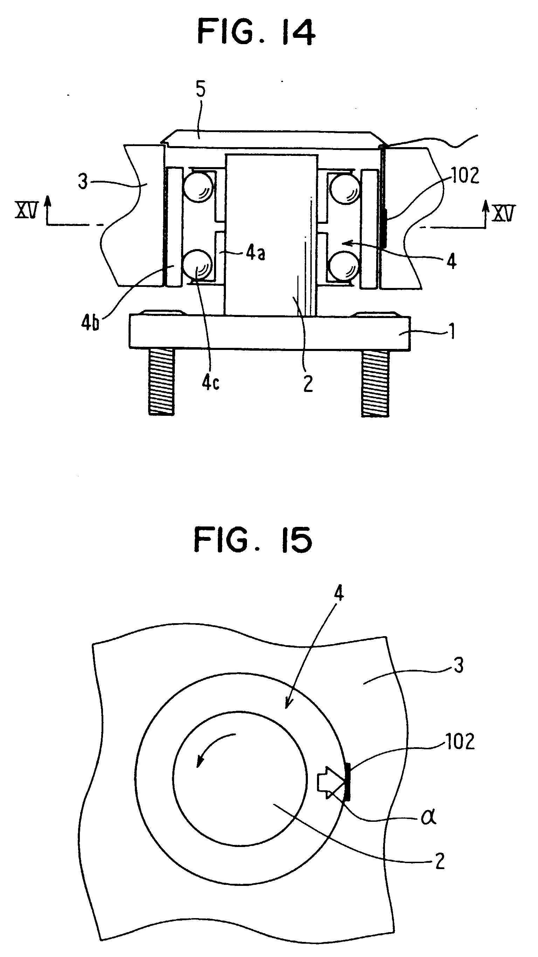

In place of the wheel rotation sensor 100, a sensor 102 such as a piezoelectric device or a distortion gage generates a signal which is subjected to a frequency analysis to estimate an air pressure of a tire in the same way as the embodiment described so far. Provided between the bearing 4 and the axle housing 3 shown in Fig. 14, the sensor 102 varies its output in accordance with a displacement resulting from an applied force.

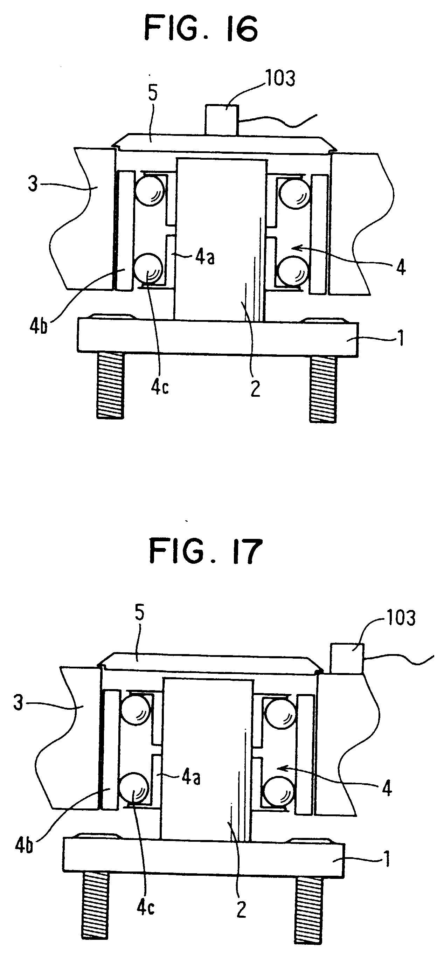

The piezoelectric device 102 can also be used to detect an axial force applied to the axle 2 presumably serving as a base of eccentricity of the rotor 10, or a force α applied by the axle 2 to the axle housing 3 in the radial direction as shown in Fig. 15 in order to provide the same effects.

In addition, an acceleration sensor 103 for detecting a vibration of the axle housing 3 can also be provided as shown in Figs. 16 and 17 in order to provide the same effects. It should be noted that, in this case, the acceleration sensor 103 can be provided on the cover 5 as shown in Fig. 16 or attached directly to the axle housing 3.

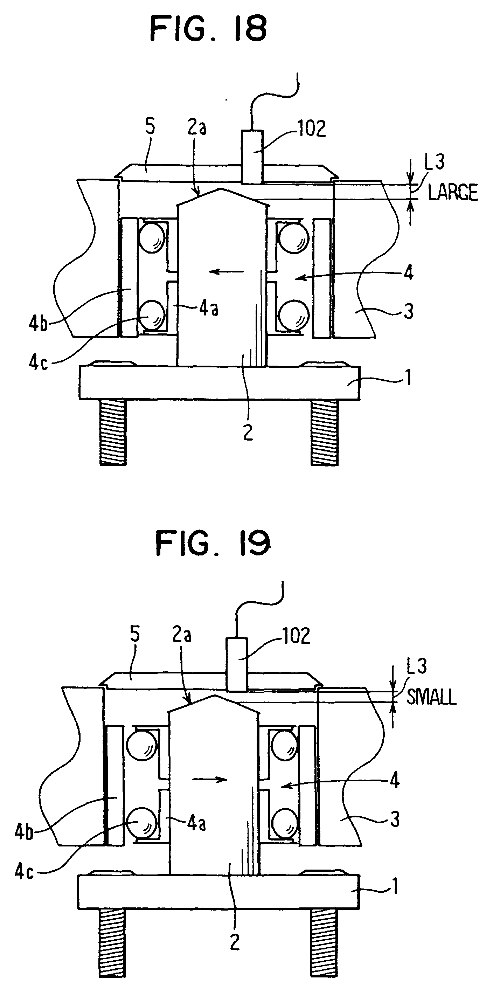

Furthermore, by providing a taper 2a on the edge of the axle 2 and installing a sensor 102 such as a piezoelectric device on the cover 5 as shown in Figs. 18 and 19, the eccentricity of the axle 2 can be detected as variations in distance L3 in order to provide the same effects.

Moreover, steps 115 and 116 can be inserted into the flowchart shown in Fig. 3 at a location before the step 120 of at which frequencies of resonance attributed to a spring constant are found as described earlier. At the step 115, the speed of the vehicle is detected. At the step 116, the detected speed of the vehicle is examined to determine whether the speed is included in a predetermined high-speed range. If the detected speed of the vehicle is determined to be not included in the predetermined high-speed range, a resonance frequency close to the normal resonance frequency of 40 Hz is found at the step 120 to be compared with a resonance-frequency criterion value of typically 40 Hz. If the detected speed of the vehicle is determined to be included in the predetermined high-speed range, on the other hand, a resonance frequency close to the normal resonance frequency of 70 Hz or 95 Hz (that is, a frequency of resonance attributed to eccentricity of the rotational center of the axle 2 or the rotor 10) is found at the step 120 to be compared with a resonance-frequency criterion value for the high-speed range.

In the embodiment described above, the resonance frequency used in the estimation of the air pressure of a tire or the estimation of variations in tire air pressure based on the eccentricity of the rotational center of the axle 2 in a high-speed range is a frequency close to 70 Hz or 95 Hz. Note, however, that it is quite within the bounds of possibility that the frequency of resonance caused by the eccentricity of the rotational center of the axle 2 changes in accordance with factors like the type of the tire such as a temper tire and a bias tire, the diameter of the tire or the rigidity of a member supporting the bearing 4. In this case, the frequency of resonance caused by the eccentricity of the rotational center of the axle 2 is identified in accordance with the factors such as the type of the tire to be used in the estimation of the air pressure of a tire or the estimation of variations in tire air pressure. Second Embodiment

Next, a second embodiment is explained. Fig. 21 is a block diagram showing the configuration of a monitor device for monitoring the air pressure of a tire.

As shown in the figure, rotors 10a to 10d are provided on wheels 6a to 6d of the vehicle respectively. Rotated along with the wheels 6a to 6d, the rotors 10a to 10d each have slits or projections on the outer circumferential surface thereof. Wheel rotation sensors 50a to 50d of the electromagnetic-pickup type are provided to face the outer circumferential surfaces of the rotors 10a to 10d respectively.

When a slit or a piece of projections on the outer circumferential surface of the rotor 10j, where j = a to d, passes through a space in front of the wheel rotation sensor 50j of the electromagnetic-pickup type, in the sensor 50j, a coil senses a change in magnetic flux passing through a core not shown in the figure and converts the change into an electrical signal supplied to an ECU (Electronic Control Unit) 7. The ECU 7 carries out signal processing such as FFT processing on the electrical signal received from wheel rotation sensor 50j to find the resonance frequency of the tire of the wheel 6j. The ECU 7 then determines whether a drop in tire air pressure exists from a change in resonance frequency. A result of the determination indicating a drop in tire air pressure is reported to a passenger through an alarm unit 8. An independent alarm indicating a drop in tire air pressure can be reported to a passenger through the alarm unit 8 individually for each of tires 6a to 6d or can be reported only when at least one of the tires 6a to 6d is in a state of a decreased air pressure of a tire 6j.

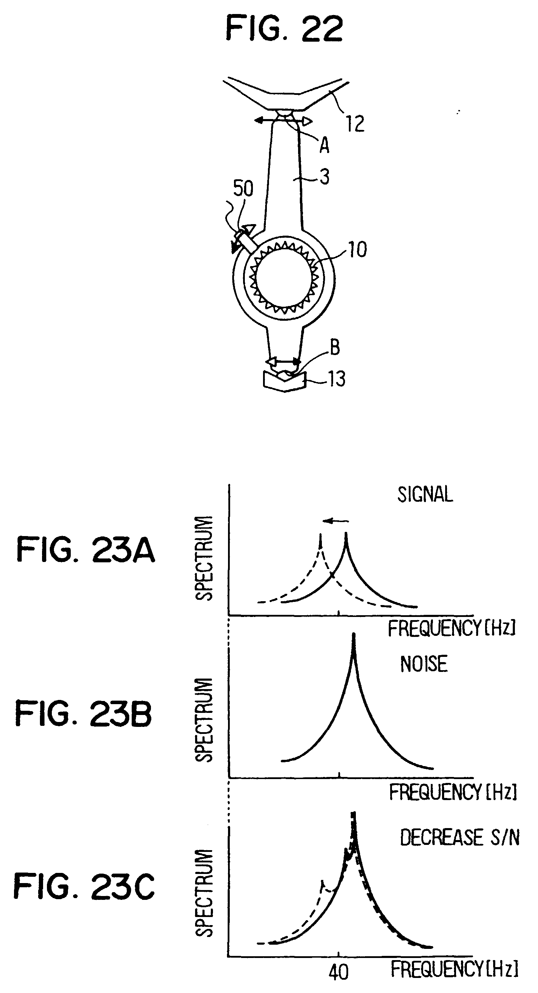

The following description explains a structure of installation of the wheel rotation sensors 50a to 50d on the periphery of an axle and a signal output by each of the wheel rotation sensors 50a to 50d by referring to Figs. 22 and 23A to 23C.

Since the wheel rotation sensors 50a to 50d and their peripheries have about the same configuration, the wheel rotation sensor 50a is used as a representative denoted by reference numeral 50 in the following description. By the same token, a rotor 10 is a representative of the rotors 10a to 10d. As shown in Fig. 22, the wheel rotation sensor 50 is provided on an axle housing 3 which is supported by an upper arm 12 at a support point A on the upper side through a ball joint and supported similarly by an lower arm 13 at a support point B on the lower side also through a ball joint. The rotor 10 is provided on an axle or a member which rotates along with the axle. It should be noted that that the axle and the member themselves are not shown in the figure.

The following description explains a mechanism in which noise is introduced into the wheel rotation sensor 50 provided as described above. The axle housing 3 itself, on which the wheel rotation sensor 50 is provided, vibrates in the back & forth direction of the vehicle indicated by arrows in the figure at mutually opposite phases at the support points A and B. This a vibration is inherent a vibration of an unsprung caused by, among other things, a suspension vibration as described earlier. The vibration of the axle housing 3 causes a rotational vibration in the wheel rotation sensor 50 in directions indicated by arrows in the figure. The rotational vibration of the wheel rotation sensor 50 in turn brings about a displacement of the wheel rotation sensor 50 relative to the rotor 10. The displacement is included in an output signal as frequency-component noise shown in Fig. 23B.

Fig. 23A is a diagram showing a shift of the waveform of a spectrum peaked at a resonance frequency with no noise included in a signal generated by the wheel rotation sensor 50. The shift is caused by a decrease in tire air pressure. To be more specific, a solid line represents a waveform before the air pressure of the tire decreases and a dashed line represents a waveform after the air pressure of the tire decreases. Since Fig. 23A shows a case of a high S/N ratio, the resonance frequency is much shifted by a decrease in tire air pressure. Fig. 23B is a diagram showing the waveform of a spectrum obtained as a result of addition of noise to the spectrum shown in Fig. 23A. In this case, a change from a solid line to a dashed line is blocked by the noise component as shown in Fig. 23C and the S/N ratio decreases considerably.

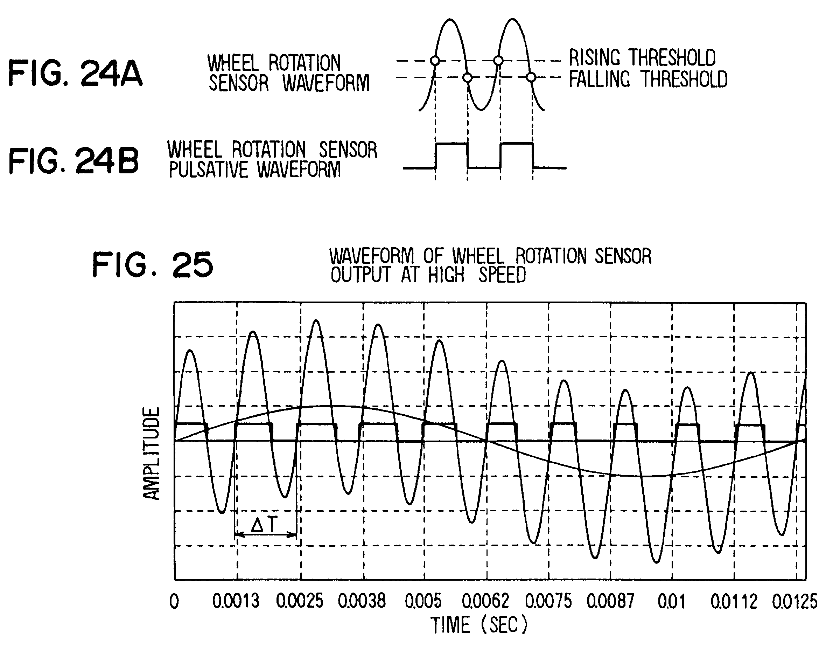

It should be noted that the sinusoidal waveform of the signal generated by the wheel rotation sensor 50 as shown in Fig. 24A can be reshaped into a pulsative waveform representing the speed of the vehicle as shown in Fig. 24B by using a rising-edge threshold and a falling-edge threshold shown in Fig. 24A.

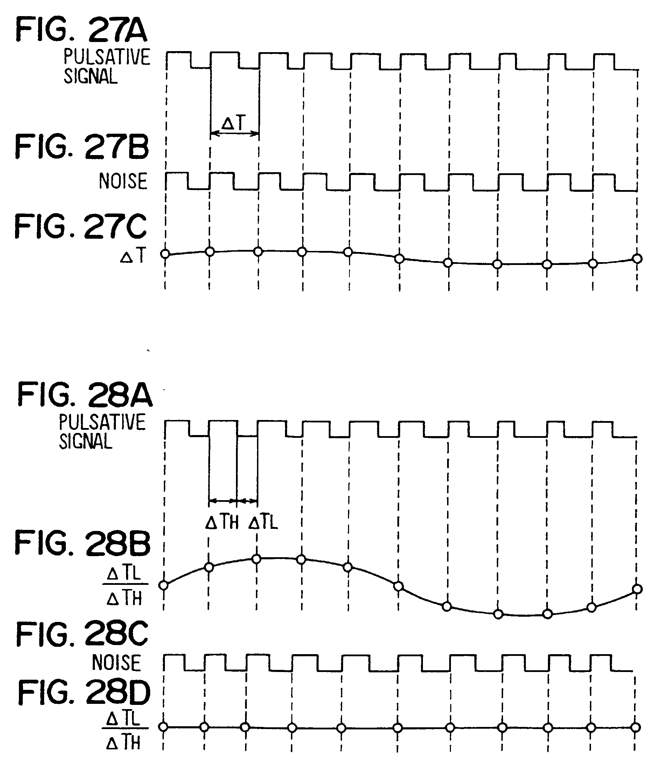

Fig. 25 is a diagram showing a typical waveform of a signal generated by the wheel rotation sensor 50 at a high speed of the vehicle. It should be noted that the figure shows a compound waveform of a signal representing the rotational speed of the wheel with a frequency of 800 Hz and a signal representing consecutive eccentricity periods of the wheel rotation sensor 50 occurring at a frequency of 80 Hz. The eccentricity periods occur as relative eccentricity caused by typically an installation error of the wheel rotation sensor 50 relative to the rotor 10. It should be noted that the pulsative waveform shown in Fig. 24B is based on the variation period of a unit time ΔT of a compound waveform shown in Fig. 27A. It is also worth noting that the period between the rising edge of a pulse and the falling edge of the pulse varies due to the period of eccentricity so that the apparent waveform can be lengthened and shortened. In addition, the period ΔT between the rising edge of a pulse and the rising edge of the next pulse can also be changed.

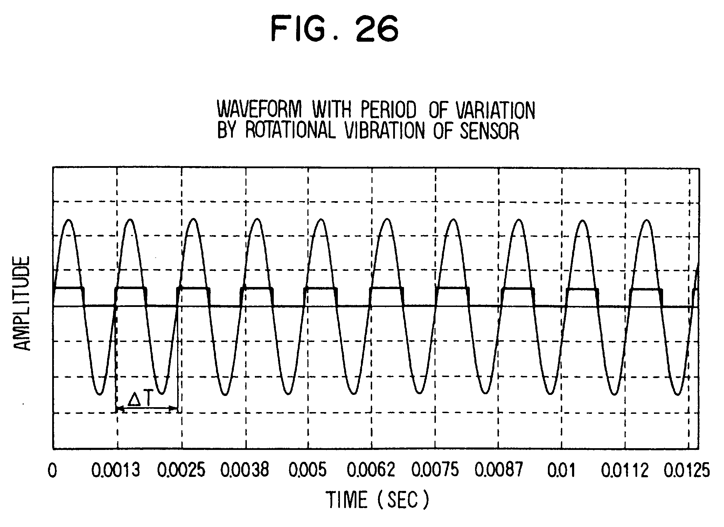

If no consecutive periods of eccentricity are included as a component in the signal generated by the wheel rotation sensor 50, the waveform of the signal is an ideal sinusoidal waveform. Assume, however, that in the signal output by the wheel rotation sensor 50, the aforementioned rotational vibration accompanying a suspension vibration or the like happens to be the same as the eccentricity periods occurring at a frequency of 80 Hz as shown in Fig. 25. In this case, the variations of ΔT itself shown in Fig. 26 approximately match those shown in Fig. 25. That is, the pulsative waveform of the output signal shown in Fig. 25 becomes a waveform shown in Fig. 27A. The period ΔT shown in Fig. 27A and the period ΔT of a pulsative signal including noise caused by the a rotational vibration of the wheel rotation sensor 50 shown in Fig. 26 represent an equivalent period of variation like one shown in Fig. 27C. The rotational vibration of the wheel rotation sensor 50 is caused by a vibration of the axle housing 3 which is attributed to a vibration of an unsprung.

Thus, the output signal of the case shown in Fig. 25 can not be distinguished from the output signal including noise caused by a rotational vibration of the wheel rotation sensor 50 for the case shown in Fig. 26.

In order to solve this problem, a ratio of ΔTL/ ΔTH is considered where the symbol ΔTH denotes a period of time between a raising edge of a pulse and a falling edge of the same pulse while the symbol ΔTH denotes a period of time between a falling edge of a pulse and a raising edge of the next pulse as shown in Figs. 28A to 28D. For a case equivalent to that shown in Fig. 25, variations in ratio of ΔTL/ΔTH exhibit a waviness characteristic as shown in Fig. 28B. That is, the waviness of the amplitude of an output signal representing the rotational speed of the wheel can be extracted. For a case equivalent to that shown in Fig. 26, on the other hand, the ratio of ΔTL/ΔTH has a fixed value as shown in Fig. 28D. Thus by considering the ratio of the time period ΔTL to the time period ΔTH of the signal output by the wheel rotation sensor 50, an output signal including noise can be distinguished from an output signal including no noise.

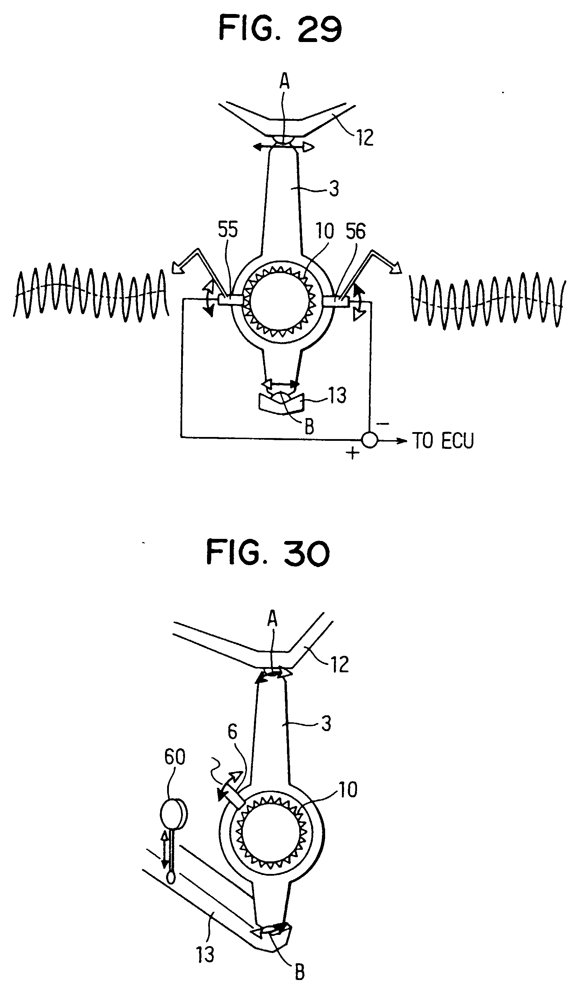

Next, a first modified version of the second embodiment is explained by referring to Fig. 29. In the first modified version of the second embodiment, two wheel rotation sensors 55 and 56 are provided on a rotor 10 with the wheel rotation sensors 55 and 56 facing each other. In this case, a difference between signals output by the wheel rotation sensors 55 and 56 are used for computing the rotational speed of the wheel. Since noise included in the signal generated by the wheel rotation sensor 55 has the same phase as noise included in the signal generated by the wheel rotation sensor 56, the noise components output by the wheel rotation sensors 55 and 56 cancel each other. On the other hand, a component representing eccentricity periods as shown in Fig. 25 in a signal output by the wheel rotation sensor 55 to represent the rotational speed of the wheel has a phase more or less opposite to the phase of a component representing eccentricity periods in a signal output by the wheel rotation sensor 56 to represent the rotational speed of the wheel. Thus, the S/N ratio of the synthesized output signal is doubled.

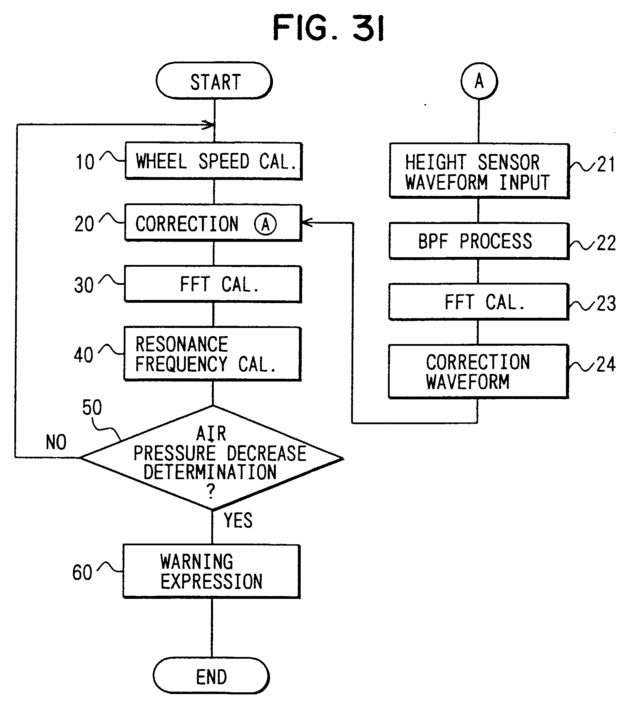

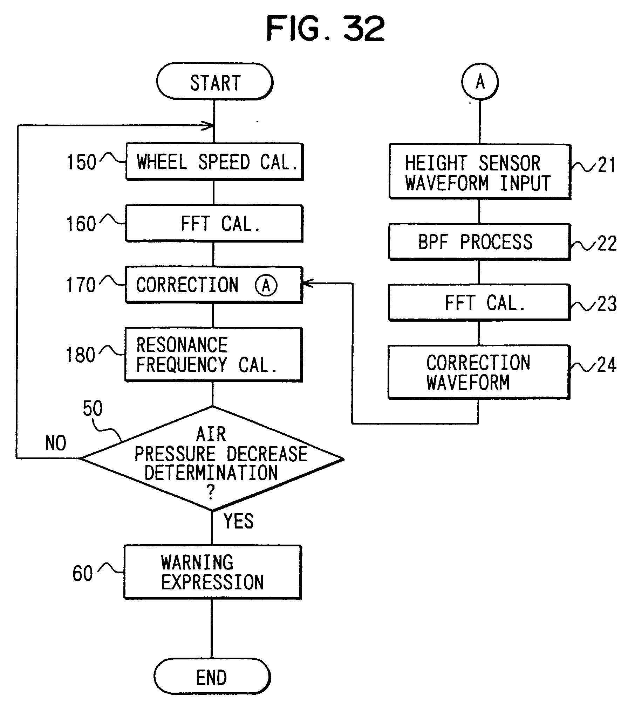

Next, a second modified version of the second embodiment is explained by referring to Fig. 30. In the second modified version of the second embodiment, noise is eliminated by software in accordance with a flowchart shown in Fig. 31 or 32. As shown in Fig. 30, a height sensor 60 is provided on a low arm 13. It should be noted that, since a vehicle has 4 low arms 13, 4 height sensors 60 are required for the vehicle with each of the height sensors 60 provided for one of the low arms 13. The height sensor 60 monitors a stroke which varies due to a back & forth vibration of the low arm 13 in order to detect generation of noise caused by a rotational vibration occurring in a wheel rotation sensor 50.

Fig. 32 shows a flowchart representing processing to make a correction in a time domain. As shown in the figure, the flowchart begins with a step 10 at an ignition-on time to start the engine. At this step, the rotational speed of each wheel is found from a signal generated by the wheel rotation sensor 50 for the wheel.

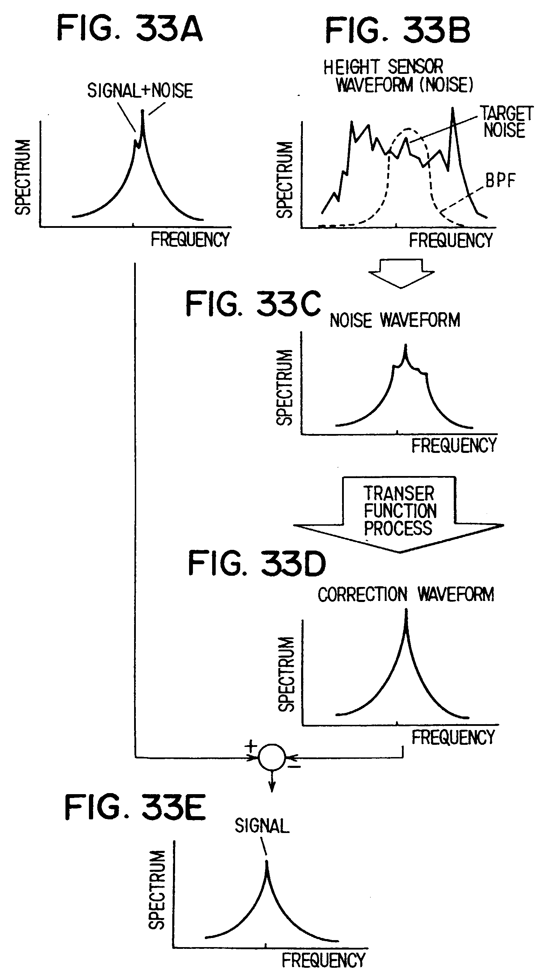

At the next step 20, the rotational speed of the wheel is corrected. Details of the correction are represented by steps 21 to 24 of a sub-flowchart shown in the same figure. At the step 21, the waveform of a signal representing variations in height is input from the height sensor 60. The waveform is represented by a solid line in Fig. 33B. At the step 22, BPF (Band-Pass Filter) processing is carried out. In the BPF processing, frequencies at which noise is generated can be measured and predicted in advance. The spectrum of the noise is represented by a dashed line in Fig. 33B. With the noise frequencies known, required frequency components can be extracted from a signal generated by the height sensor 60 as if the signal were passed through a band-pass filter. A waveform shown in Fig. 33C is obtained. At the step 23, the extracted signal is subjected to FFT processing. Then, at the step 24, a correction waveform for the signal representing the rotational speed of the wheel is produced based on a transfer function measured in advance for predicting and computing a vibration (a rotational vibration) at the position of the wheel rotation sensor 50 based on a vibration (a rotational vibration) at the position of the height sensor 60. The waveform produced at the step 24 is shown in Fig. 33D. This waveform can be regarded as result of wave reshaping of noise included in a signal generated by the height sensor 60.

At a step 30, FFT processing for detecting variations in resonance frequency caused by changes in tire spring constant is carried out for extracting components effective for estimation of the air pressure of a tire based on the corrected signal representing the rotational speed of the wheel. The processing carried out at the step 30 results in a waveform shown in Fig. 33E. To put it concretely, as shown in Fig. 33A, the correction waveform produced at the step 24 is subtracted from a waveform which was obtained from the FFT processing and includes noise caused by the rotational vibration of the wheel rotation sensor 50. Then, at a step 40, a variation in resonance frequency occurring in a time unit is found. Subsequently, the processing goes on to a step 50 to determine whether the air pressure of the tire has decreased from the variation found at the step 40. If the air pressure of the tire has decreased, a warning message is displayed at a step 60.

The flowchart shown in Fig. 32 represents processing to correct elimination of noise in a frequency domain.

As shown in the figure, the flowchart begins with a step 150 at which the rotational speed of each wheel is found in the same way as the step 10. Then, at a step 160, FFT processing for detecting variations in resonance frequency caused by changes in tire spring constant is carried out based on a signal representing the rotational speed of the wheel. At the next step 170, a result of the FFT processing obtained at the step 160 is corrected. The basis of the correction is represented by steps 21 to 24 of a sub-flowchart of the same figure which are the same as the steps 21 to 24 respectively of the flowchart shown in Fig. 31. Then, at a step 170, a noise component is eliminated from the result of the FFT processing obtained at the step 160 by a vibration of the wheel rotation sensor 50 itself based on a result of the FFT processing carried out on a signal output by the height sensor 60 at the step 23 and a correction waveform produced at the step 24.

At the next step 180, a resonance frequency is found based on the result of the FFT processing corrected at the step 170. The processing then goes on to steps 50 and 60 which are the same as the steps 50 and 60 of the flowchart shown in Fig. 31.

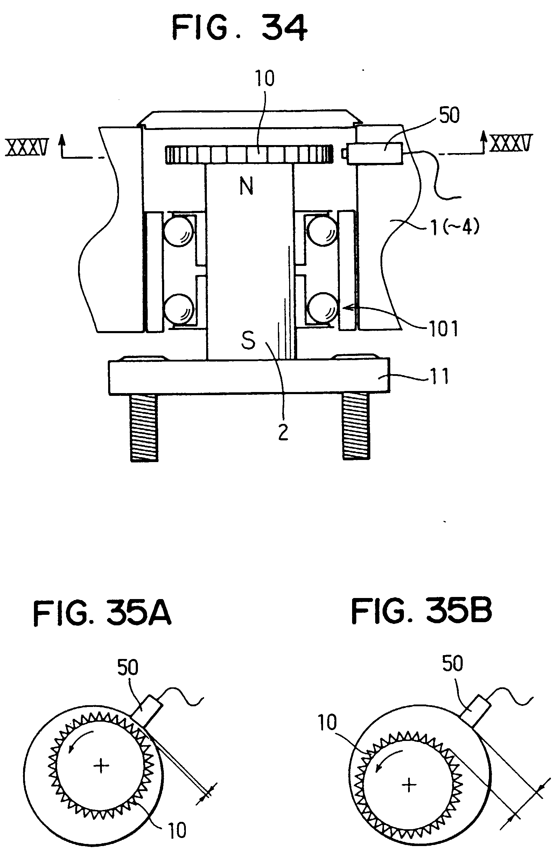

Next, a third modified version of the second embodiment is explained by referring to Figs. 34, 35A and 35B.

In the third modified version, the axle 2 is magnetized to improve the S/N ratio. As shown in Fig. 34, the axle 2 is magnetized so that one end of the axle 2, that is, a member of the axle 2 attached to the rotor 10, becomes a single pole of magnetism. By doing so, due to eccentricity of the rotor 10, the rotor 10 moves from a position closest to the wheel rotation sensor 50 as shown in Fig. 35A to a position farthest from the wheel rotation sensor 50 as shown in Fig. 35B. By a magnetic flux of the axle 2, the change of a flux passing through a coil of the wheel rotation sensor 50 caused by an eccentric rotational movement of the axle 2 or the rotor 10 increases, allowing sensitivity to be improved. Thus, the strength of the signal can be increased relatively to noise caused by a rotational movement of the wheel rotation sensor 50 itself, allowing the S/N ratio to be increased.

### Third Embodiment

Next, a third embodiment of the present invention is explained.

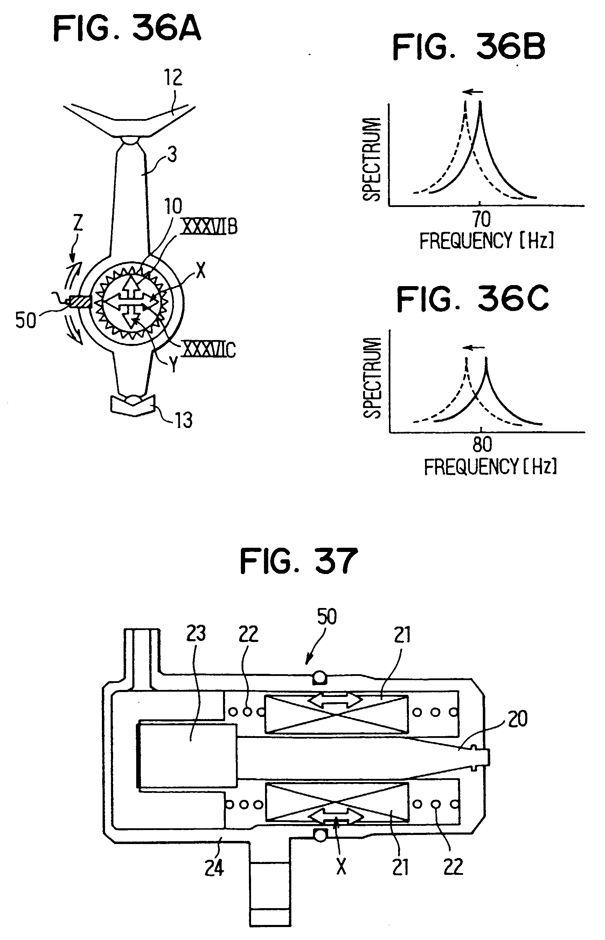

A theory of indirect detection of the air pressure a tire based on a signal output by a wheel rotation sensor is explained by referring to Figs. 36A to 36C.

In the third embodiment shown in Fig. 36A, a wheel rotation sensor 50 is attached to an axle housing 3 connecting an upper arm 12 and a lower arm 13 as described earlier. Provided inside the axle housing 3, a rotor 10 rotates along with an axle which is not shown in the figure. The wheel rotation sensor 50 is installed to face the rotor 10. The rotor 10 and the axle have components that vibrate in a direction indicated by an arrow X and a direction indicated by an arrow Y. The arrows X and Y indicate the back & forth and the up & down directions respectively of the vehicle. The vibrations in the X and Y directions are caused by a vibration of an unsprung such as a suspension vibration and a vibration introduced to the tire from the surface of the road while the vehicle is running. In particular, at a high-speed range of the vehicle or at a vehicle speed higher than typically 70 km/hour, the frequency of tire resonance caused by a spring constant of the tire can be extracted as vibration components in the X and Y directions of the rotor 10. That is, the frequency of the tire resonance caused by the vibration component in the Y direction is extracted at about 70 Hz for the normal air pressure of the tire as indicated by a solid line in Fig. 36B. On the other hand, the frequency of the tire resonance caused by the vibration component in the X direction is extracted at about 80 Hz for the normal air pressure of the tire as indicated by a solid line in Fig. 36C. It should be noted that, when the air pressure of the tire decreases, the resonance frequencies also decrease as indicated by shifts from the solid lines to dashed lines shown in Figs. 36B and 36C.

For the vibration components in the X and Y directions described above, the vibration generated in the wheel rotation sensor 50 itself by the suspension vibration occurs in the rotational direction of the rotor 10 indicated by an arrow Z in the figure. Since the vibration in the rotational direction occurs in the rotational direction of the rotor 10, this vibration becomes noise which lowers the level of a signal representing the rotational speed of the wheel.

As an effect of the vibration in the Z direction, the vibrations in the X and Y directions, that is, the vibration in the radial direction of the rotor 10, increase, raising the level of the signal generated by the wheel rotation sensor 50 in comparison with the noise to provide an improved S/N ratio.

In this embodiment, a member affecting the signal generated by the wheel rotation sensor 50 is vibrated in the radial direction of the rotor 10 so that the vibration passing through the wheel rotation sensor 50 in the radial direction of the rotor 10, that is, in the X or Y direction required in the estimation of the tire air pressure, is strengthened to improve the S/N ratio. To be more specific, a coil 21 experiencing variations in magnetic flux passing through a yoke core 20 in the wheel rotation sensor 50 is vibrated. A concrete structure of the wheel rotation sensor 50 is explained by referring to Fig. 37.

As shown in the figure, the structure comprises the yoke core 20 and the coil 21. Made of a metal, the yoke core 20 has a member facing the rotor 10. Provided to surround the yoke core 20, the coil 21 generates an electromotive force in accordance with a variation in magnetic flux passing through the yoke core 20 and outputs the electromotive force as a signal generated by the wheel rotation sensor 50 to an ECU. It should be noted that the yoke core 20 is magnetized by a permanent magnet 23. The yoke core 20, the coil 21 and the permanent magnet 23 are molded and a resin housing 24 is created. In the housing 24, the coil 21 is installed in such a way that the coil 21 can be moved in the axial direction of the yoke core 20. The coil 21 can be slightly vibrated by a spring 22 in the axial direction of the core 20, that is, in the radial direction of the rotor 10 shown in Fig. 36 or the direction indicated by the arrow X in Fig. 37.

By configuring the wheel rotation sensor 50 in this way, the coil 21 of the wheel rotation sensor 50 is capable of increasing the vibration in the radial direction of the rotor 10 which is dependent on the air pressure of the tire and thus required in the estimation of the air pressure. That is, the vibration of the coil 21 in the radial direction of the rotor 10 results in variations in magnetic flux. Thus, the output is increased in addition to the variations in magnetic flux caused by the vibration of the coil 21 in the radial direction of the rotor 10. It should be noted that the vibration in the rotational direction of the rotor 10 which becomes noise occurs in a direction perpendicular to the movement direction of the coil 21. An effect of preventing the vibration in the rotational direction of the rotor 10 caused by the movement of the coil 21 is very small. Thus, the S/N ratio of a signal component in the radial direction of the rotor 10 which is included in a signal generated by the wheel rotation sensor 50 and dependent on the air pressure of the tire increases, allowing the sensitivity and the precision of the processing to estimate the air pressure of the tire to be improved.

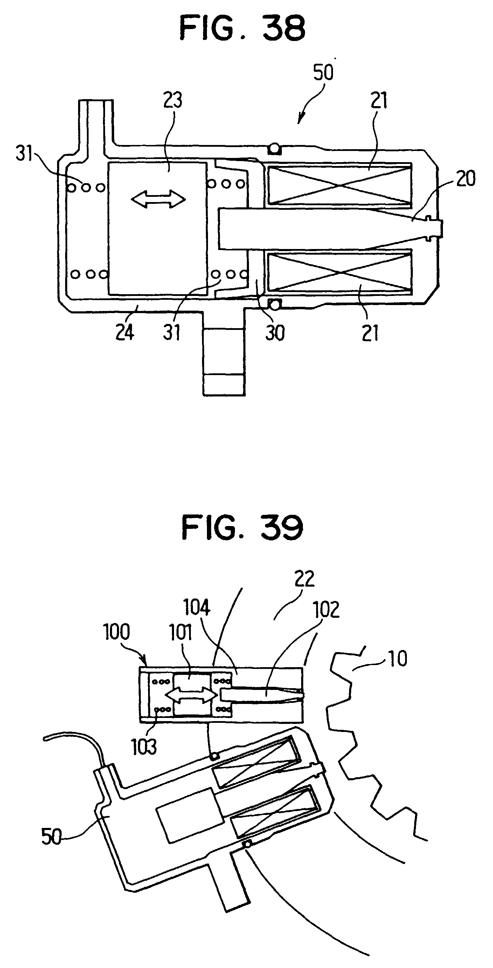

Next, a first modified version of the third embodiment is explained by referring to Fig. 38. In the first modified version, unlike the third embodiment, the permanent magnet 23 is slightly vibrated in the axial direction of the yoke core 20, that is, the radial direction of the rotor 10, instead of vibrating the coil 21 as implemented in the third embodiment. That is, the permanent magnet 23 supported by a spring 31 can be moved in the housing 24 in the axial direction of the yoke core 20. It should be noted that a stopper 30 is provided as a support plane of the spring 31. The yoke core 20 penetrates the stopper 30. Note also that it is desirable to form the stopper 30 from a material such as resin through which a magnetic flux is allowed to pass. By vibrating the permanent magnet 34 in the radial direction of the rotor 10 in this way instead of vibrating the coil 21, the S/N ratio of the signal output by the wheel rotation sensor 50 can be improved as is the case with the third embodiment.

Next, a second modified version of the third embodiment is explained by referring to Fig. 39. In the third embodiment, the coil 21 or the permanent magnet 23 is vibrated in the wheel rotation sensor 50 in the radial direction of the rotor 10 so as to bring about variations in magnetic flux inside the wheel rotation sensor 50 itself. In the second modified version, a magnetic vibration system 100 is provided at a position in close proximity to the wheel rotation sensor 50 which is a conventional wheel rotation sensor. The magnetic vibration system 100 brings about external variations in magnetic flux in the radial direction of the rotor 10 for the wheel rotation sensor 50. In the magnetic vibration system 100, a permanent magnet 101 is supported by a spring 103 and vibrated in a housing 104 in the radial direction of the rotor 10, that is, the axial direction of a core 102. The vibration of the permanent magnet 101 results in variations in magnetic flux which pass through the coil 21, having an effect on the wheel rotation sensor 50. Thus, variations in magnetic flux related to the vibration in the radial direction of the rotor 10 in the signal generated by the wheel rotation sensor 50 are magnified by the magnetic vibration system 100. As a result, the S/N ratio of the signal generated by the wheel rotation sensor 50 is improved. Fourth Embodiment

Next, a fourth embodiment of the present invention is explained.

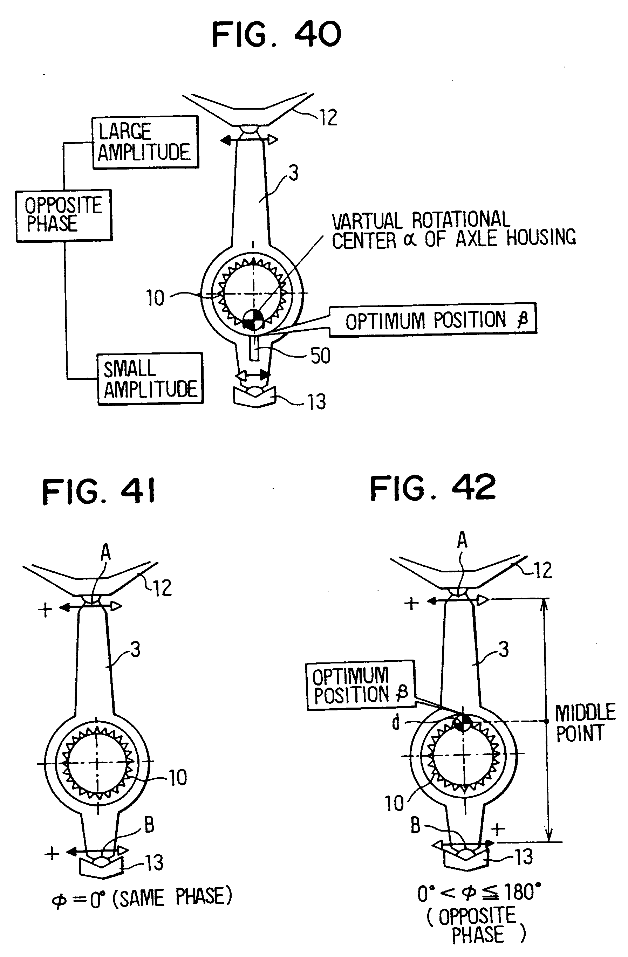

Fig. 40 is a diagram showing a wheel periphery surrounding a wheel employed by a vehicle having an ABS system.

A wheel rotation sensor 50 is attached to an axle housing 3 connecting an upper arm 12 to a lower arm 13. A rotor 10 is provided to face the wheel rotation sensor 50. Slits or projections are created over the entire circumference of the rotor 10. When the rotor 10 rotates, a magnetic flux of a magnetic circuit formed between the wheel rotation sensor 50 and the rotor 10 changes. The changes in magnetic field are picked up by a coil in the wheel rotation sensor 50. It should be noted that the rotor 10 rotates along with an axle which is not shown in the figure.

As shown in Fig. 21, the wheel rotation sensor 50 (representing the wheel rotation sensors 50a to 50d) and the rotor 10 (representing the rotors 10a to 10d) are provided on the wheel 6 (representing the wheels 6a to 6d). Signals picked up at the wheel rotation sensors 50a to 50d are supplied to an ECU (Electronic Control Unit) 7. Through a warning device 8, a passenger is informed of a decrease in tire air pressure detected in the processing carried out at the steps 100 to 140 of flowchart shown in Fig. 3.

The following description explains a technique of determining the position of the installation of the wheel rotation sensor 50 characterizing the present invention by referring to Fig. 40 to 46B.

Fig. 40 is a diagram showing the configuration of a fourth embodiment using a representative front axle housing with two support points. The wheel rotation sensor 50 is placed at a position β closest to an estimated virtual rotational center α of the axle housing 3. At the virtual rotational center α, a member of the axle housing 3 has a minimum vibration amplitude. Thus, by placing the wheel rotation sensor 50 at the optimum position β, the vibration of the wheel rotation sensor 50 is also reduced. As a result, the amount of noise caused by the vibration of the wheel rotation sensor 50 and included in a signal generated by the wheel rotation sensor 50 can be reduced considerably.

The virtual rotational center α is found as follows. First of all, a G sensor or a distortion gauge is used for measuring vibration behaviors at a support point A at a junction between the axle housing 3 and an upper arm 12 and at a support point B at a junction between the axle housing 3 and a lower arm 13. To be more specific, the amplitudes and the phases at the support points A and B are each expressed accurately as a vector. In this case, measurements along two axes, namely, an up & down axis and a left-right axis in the figure, are desirable. If the behavior of the vibration such as the amplitude of the vibration becomes obvious from a measurement in only one direction, however, a single-axial measurement is sufficient. Vibrations at the support points A and B are sensed in this way and subjected to a frequency analysis. Then, an amplitude (that is, a vibration vector) and a phase difference at a frequency of noise included in a signal generated by the wheel rotation sensor 50 are computed. In this case, the virtual rotational center α of the axle housing 3 exists in directions perpendicular to the vibration vectors at the support points A and B. In dependence on the phase difference, the virtual rotational center α of the axle housing 3 can or can not be determined at 1 point. Here, a case in which the virtual rotational center α of the axle housing 3 can be determined at 1 point is taken into consideration. The optimum position β of the wheel rotation sensor 50 is determined for such a case in accordance with the following order. First of all, an optimum position β closest to the virtual rotational center α of the axle housing 3 is selected by taking, among other things, the shape of the wheel rotation sensor 50 into consideration. Then, if there are a plurality of optimum positions β closest to the virtual rotational center α of the axle housing 3, an optimum position close to a support point with a smaller amplitude of the vibration vector is selected.

If the amplitude and the phase at the support point A are the same as those at the support point B as shown in Fig. 41, one may assume that neither vibration on the axle housing 3 nor vibration of the wheel rotation sensor 50 caused by the vibration of the axle housing 3 exists and no noise is included in a signal generated by the wheel rotation sensor 50. Thus, the sensor wheel 50 can be placed at any position.

If the amplitude at the support point A is equal to that at the support point B but the phase at the support point A is opposite to that at the support point B as shown in Fig. 42, at a phase φ other than 0 and 180 degrees, the virtual rotational center α moves. From the dynamics-symmetry point of view, however, a middle point between the support points A and B can be regarded as the virtual rotational center α.

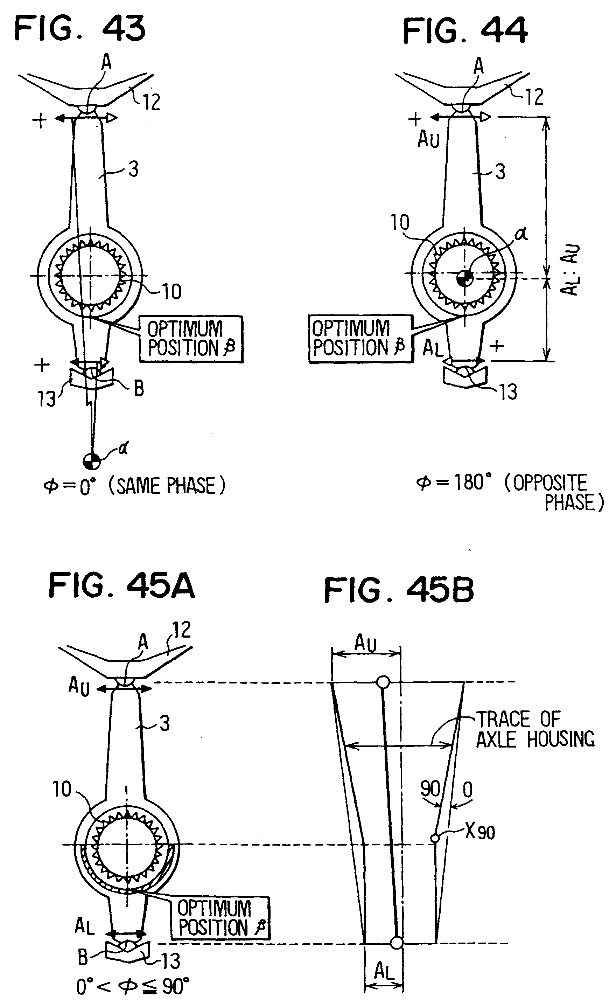

If the amplitude at the support point A is different from that at the support point B but the phase at the support point A is the same as that at the support point B as shown in Fig. 43, the virtual rotational center α slips to a position on an outer side of the support point A or B on an extension of a line connecting the support point A to the support point B. If the virtual rotational center α slips to a position on the outer side of the support point B on the extension of the line connecting the support point A to the support point B as shown in Fig. 43, for example, an optimum position β for installing the wheel rotation sensor 50 is located at a position on the outer side of the support point B on the extension of the line connecting the support point A to the support point B.

If the amplitude and the phase at the support point A are different from those at the support point B as shown in Fig. 44, the virtual rotational center α is located at a middle point on the line connecting the support point A to the support point B with a ratio of the distance between the middle point and the support point A to the distance between the middle point and the support point B equal to Au/Al where the symbol Au denotes the amplitude at the support point A and the symbol Al denotes the amplitude at the support point B.

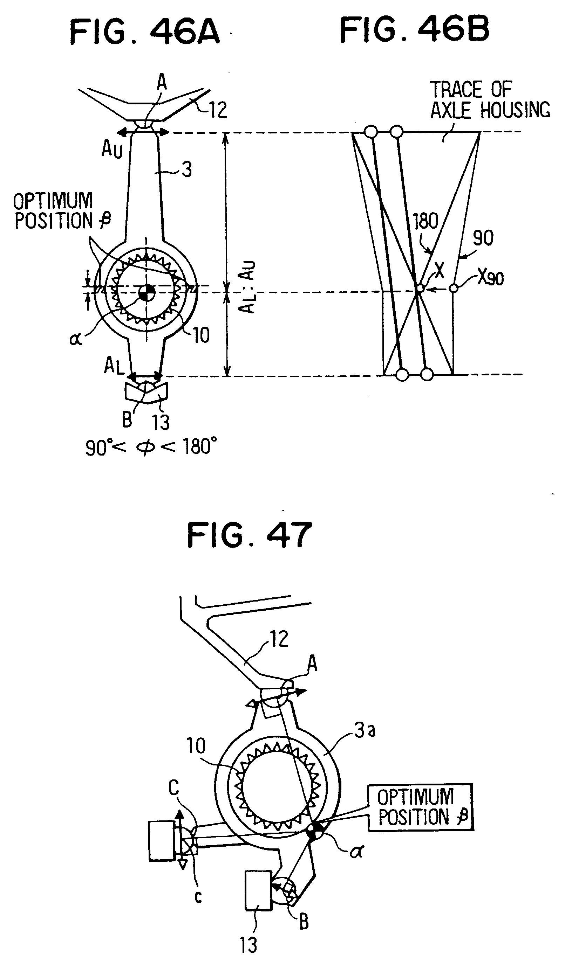

Figs. 45A, 45B, 46A and 46B are diagrams each showing a case in which the phases at the support points A and B are neither 0 nor 180 degrees and the amplitude at the support point A is different from that at the support point B. To be more specifics, Figs. 45A and 45B are diagrams each showing a case of (0 degrees < φ ≦ 90 degrees) where the symbol φ denotes the phase. In this case, any point between a member X90 and the support point B or between the center of the rotor 10 shown in Fig. 45A and the support point B can be used as an optimum position β where the member X90 is a member of the axle housing 3 with a smallest amplitude or a member corresponding to the narrowest range representing loci of the axle housing 3 accompanying phase shifts. On the other hand, Figs. 46A and 46B are diagrams each showing a case of (90 degrees < φ ≦ 180 degrees) where the symbol φ denotes the phase. In this case, the loci converge from the position X90 to a point X. It should be noted that the position X is determined by a ratio of Au to Al where the symbols Au and Al denote the amplitudes at the support points A and B respectively. Thus, the optimum position β is determined at locations in close proximity to two points on the axle housing 3.

The optimum position β can be determined by using the technique described above for a plurality of support points as is the case with a rear axle housing 3a having support points A, B and C as shown in Fig. 47.

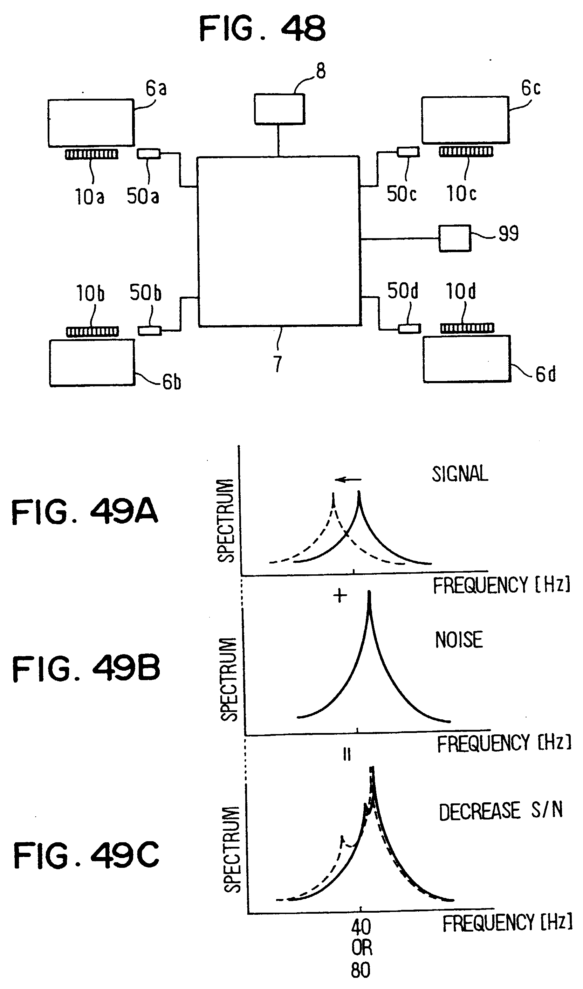

Next, a fifth embodiment of the present invention is explained by referring to Fig. 48.

As shown in the figure, rotors 10a to 10d are provided on wheels 6a to 6d of a vehicle respectively. Rotated along with the wheels 6a to 6d, the rotors 10a to 10d each have slits or projections on the outer circumferential surface thereof. Wheel rotation sensors 50a to 50d of the electromagnetic-pickup type are provided to face the outer circumferential surfaces of the rotors 10a to 10d respectively.

When a slit or a piece of projections on the outer circumferential surface of the rotor 10j (where j = a to d) passes through a space in front of the wheel rotation sensor 50j of the electromagnetic-pickup type, a coil in the sensor 50j senses a change in magnetic flux passing through a core not shown in the figure and converts the change into an electrical signal supplied to an ECU (Electronic Control Unit) 7. The ECU 7 carries out signal processing such as FFT processing on the electrical signal received from wheel rotation sensor 50j to find the resonance frequency of the tire of the wheel 6j. The ECU 7 then determines whether a drop in tire air pressure exists from a change in resonance frequency. It should be noted that, at that time, the ECU 7 carries out BPF (Band-Pass Filter) processing on the signal received from the wheel rotation sensor 50j to extract a required frequency region and performs a process to generate a correction waveform based on a transfer function. The correction waveform is used for elimination of noise from the signal received from the wheel rotation sensor 50j or a result of the FFT processing based on this signal. It should be noted that an acceleration sensor 99 is provided at a location in close proximity to a propeller shaft, a drive shaft (or an axle housing) or a differential of the vehicle. The acceleration sensor 99 detects the vibration state of a vibration system at the propeller shaft, the drive shaft or the differential. If the ECU 7 determines the existence of a drop in tire air pressure from a change in resonance frequency, the result of the determination indicating a drop in tire air pressure is reported to a passenger through an alarm unit 8. An independent alarm indicating a drop in tire air pressure can be reported to a passenger through the alarm unit 8 individually for each of tires 6a to 6d or can be reported only when at least one of the tires 6a to 6d is in a state of a decreased air pressure of the tire 6j.

Next, signals output by the wheel rotation sensors 50a to 50d are explained by referring to Fig. 49.

Fig. 49A is a diagram showing curves representing a change in resonance frequency waveform caused by a drop in tire air pressure for a case in which a signal output by the wheel rotation sensor 50j includes noise. Before the air pressure of a tire drops, a spectrum peaked at a resonance frequency is represented by a solid-line waveform. After the air pressure of a tire drops, on the other hand, the spectrum is represented by a dashed-line waveform. Since Fig. 49A shows a case of a high S/N ratio, the resonance frequency is much shifted by a decrease in tire air pressure. Fig. 49B is a diagram showing the waveform of a spectrum obtained as a result of addition of noise to the spectrum shown in Fig. 49A. In this case, a change from a solid line to a dashed line is blocked by the noise component as shown in Fig.49C and the S/N ratio decreases considerably.

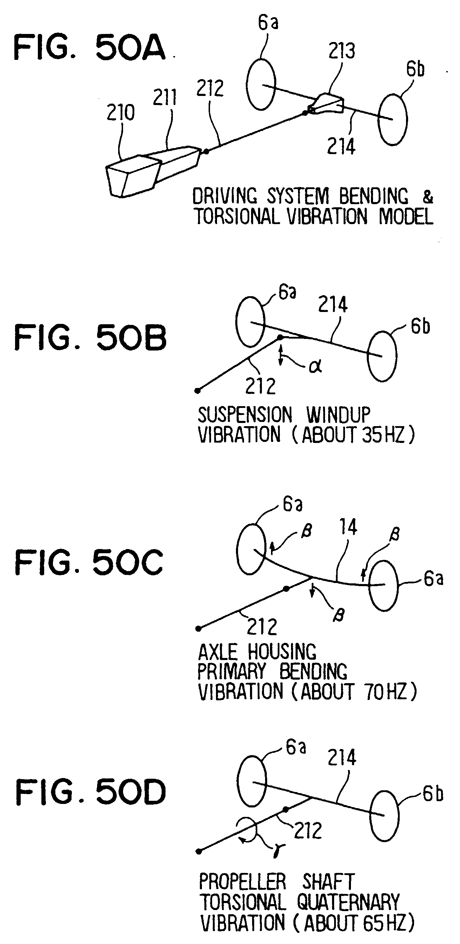

The noise signal component shown in Fig. 49B includes noise generated by a vibration model shown in Fig. 50A. As shown in Fig. 50A, an engine 210, a gear unit 211 receiving a driving force from the engine 210, a propeller shaft 212, a differential 213 and a drive shaft 214 constitute a bending and torsional vibration model. In such a vibration model, in the first place, there is a vibration of the propeller shaft 212 in the up & down direction of the car body or a direction indicated by an arrow α, that is a windup vibration caused by an up & down movement of the suspension as shown in Fig. 50B. This vibration is a vibration with a frequency of about 35 Hz. In the second place, there exists a bending vibration of the drive shaft 214 in the up & down direction of the car body or a direction indicated by an arrow β as shown in Fig. 50C. The bending vibration of the drive shaft 214 is a primary bending vibration with respect to an axle housing to which the wheel rotation sensor 50j is attached. This vibration is a vibration with a frequency of about 70 Hz. There also exists a torsional quaternary vibration in the rotational direction of the propeller shaft 212 or a direction indicated by an arrow γ at a frequency of about 65 Hz as shown in Fig. 50D. It should be noted that, in addition to the vibrations described above, there are also other vibrations such as a gear vibration at the differential 213.

The following description explains vibration components included in a signal generated by the wheel rotation sensor 50j and required in estimation of the air pressure of the tire. When the vehicle is running, resonance occurs at frequencies of about 40 Hz and 70 Hz due to a vibration caused by the surface of the road and experienced by the tire and a vibration inherent in the spring unit of the tire of the carcass unit. That is, vibration components including a component having a frequency of resonance caused by a spring constant of the tire are included in a signal generated by the wheel rotation sensor 50j. By extracting the vibration components, the air pressure of the tire can be estimated. It should be noted that resonance frequencies of about 40 Hz and 70 Hz indicate a normal air pressure of the tire. When the air pressure of the tire decreases, reducing the spring constant of the tire, the frequencies of resonance drop from 40 Hz to typically 35 Hz and from 70 Hz to 65 Hz for example. It should be noted that the resonance frequency of about 70 Hz can be considered to be the frequency of a secondary vibration of the tire. It is also worth noting that, at low and medium speeds of the vehicle, the magnitude of the spectrum at the resonance frequency close to a primary-resonance frequency of 40 Hz of the vehicle is large. In the high-speed region, on the other hand, the magnitude of the spectrum at the resonance frequency of about 70 Hz of the vehicle is large. Estimation of the air pressure of a tire based on a frequency component included in a signal generated by a wheel rotation sensor 50 due to a spring constant of the tire can be disturbed by a vibration generated in the driving system with a frequency overlapping the frequency range of a resonance vibration of the spring unit of the tire as described earlier by referring to Figs. 50B to 50D.

In order to solve the above problem, an acceleration sensor 99 shown in Fig. 48 is used for detecting the vibration of the driving system. A signal generated by the acceleration sensor 99 is detected as a vibration with the vibrations of Figs. 50B to 50D superposed thereon. These vibrations are a noise vibration component. By carrying out FFT processing on this noise vibration component, a noise component shown in Fig. 49B can be extracted. It should be noted that, as the acceleration sensor 99, an acceleration sensor provided on an anti-skid control device for a 4-wheel driven vehicle or an acceleration sensor provided on a car-behavior control device for improving a turning trace characteristic of the vehicle can be used. In this case, it is not necessary to separately provide a new acceleration sensor dedicated to the device for estimating the air pressure of a tire.

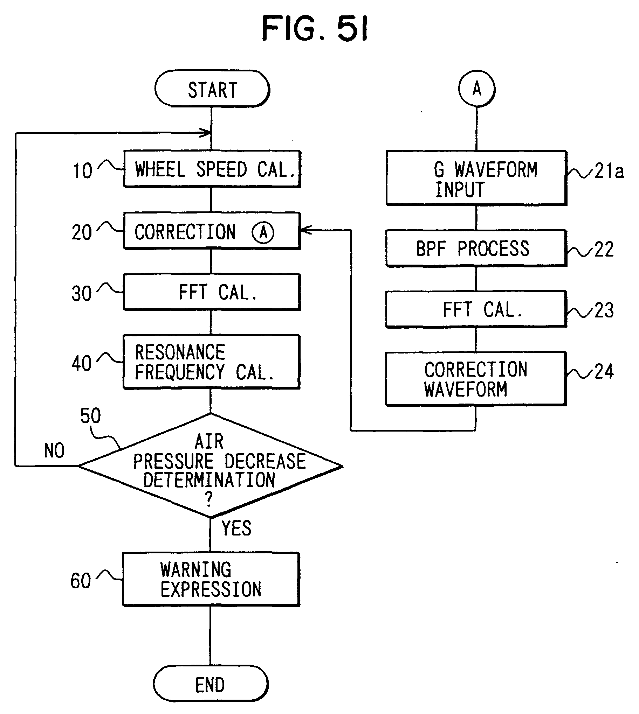

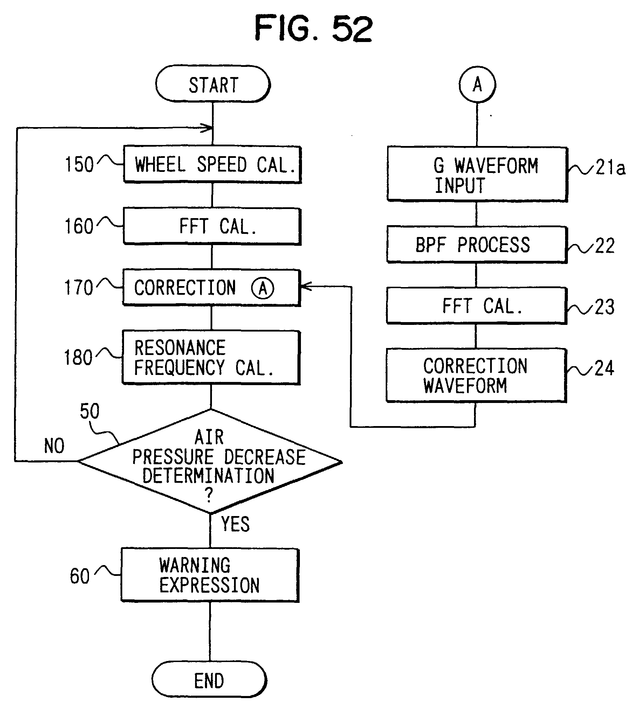

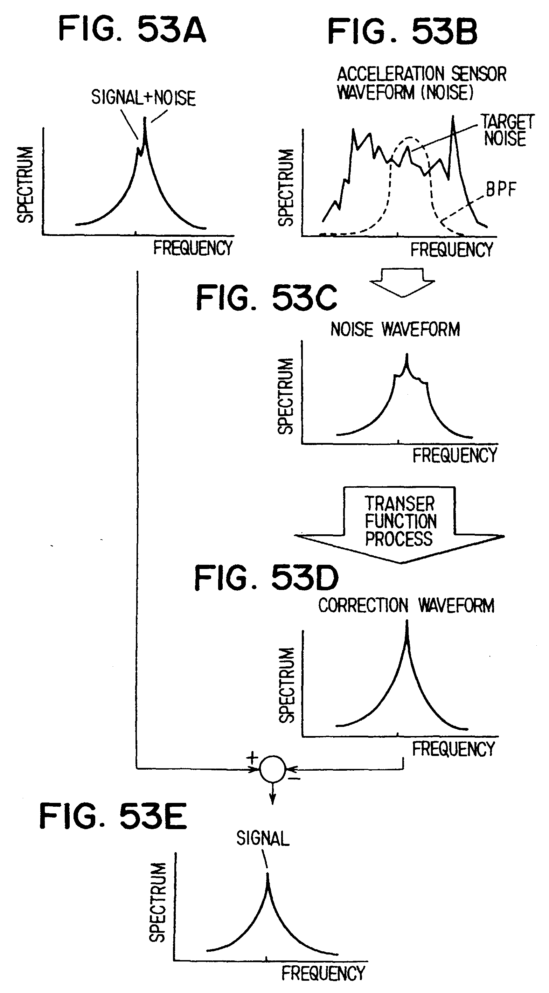

Estimation of the air pressure of a tire by elimination of noise based on a detection signal generated by the acceleration sensor 99 is explained by referring to flowcharts shown in Figs. 51 and 52 and frequency spectra shown in Figs. 53A to 53F.

The flowcharts shown in Figs. 51 and 52 are the same as the flowcharts shown in Figs. 31 and 32 respectively except that a step 21a of the former replaces the step 21 of the latter and the acceleration sensor 99 of the former replaces the height sensor 60 of the latter. At the step 21, the waveform of a signal representing variations in vehicle height is input from the height sensor 60. At a step 21a, on the other hand, the waveform of a detection signal is input from the acceleration sensor 99. Figs. 53A to 53E correspond to Figs. 33A to 33E respectively except that Fig. 53B shows the waveform of the detection signal generated by the acceleration sensor 99 instead of the waveform represented by the solid line in Fig. 33B for the height sensor 60.

## Claims

1. A tire air pressure estimating device for estimating an air pressure of a tire of a wheel (6) employed in a vehicle or indirectly estimating a change in the air pressure based on eccentricity of an axial center of an axle (2) which serves as a rotational shaft of the wheel.

2. A tire air pressure estimating device according to claim 1 wherein, as the eccentricity of the axial center of the axle (2), eccentricity of a bearing (4) for rotatably supporting the axle is used.

3. A tire air pressure estimating device according to claim 2 wherein the eccentricity of the axial center of the axle (2) has a shape resembling a spiral.

4. A tire air pressure estimating device according to any one of claims 1 to 3 wherein the eccentricity of the axial center of the axle (2) occurs in a high-speed region of the vehicle.

5. A tire air pressure estimating device according to any one of claims 1 to 4 wherein:
an output signal of a wheel rotation sensor (100) is subjected to a frequency analysis;
a frequency of a resonance component included in the output signal and caused by the eccentricity of the axial center of the axle is found; and
an air pressure of the tire or a change in the tire air pressure is estimated based on the frequency of the resonance or a change in the resonance frequency.

6. A tire air pressure estimating device according to any one of claims 1 to 4 wherein:
the eccentricity of the axial center of the axle is detected by sensing a vibration of an axle housing (3) for providing a bearing (4) for supporting the axle (2) by using a sensor (100, 101); and
an air pressure of the tire or a change in the tire air pressure is estimated by carrying out a frequency analysis on a signal output by the sensor.

7. A tire air pressure estimating device according to any one of claims 1 to 4 wherein:
the eccentricity of the axial center of the axle (2) is detected by sensing a force working between a bearing (4) for supporting the axle and an axle housing (3) for providing the bearing by using a sensor (102, 103); and
an air pressure of the tire or a change in the tire air pressure is estimated by carrying out a frequency analysis on a signal output by the sensor.

8. A tire air pressure estimating device according to any one of claims 1 to 4 wherein:
the eccentricity of the axial center of the axle (2) is detected by using a displacement sensor (102) provided on a cover (5) veiling an end of the axle; and
an air pressure of the tire or a change in the tire air pressure is estimated by carrying out a frequency analysis on a signal output by the displacement sensor.

9. A tire air pressure estimating device according to anyone of claims 6 to 8 wherein, as the frequency analysis, a resonance frequency of a resonance phenomenon between a vibration of an eccentric component of the axial center of the axle (2) and a spring unit of the tire is found.

10. A tire air pressure estimating device according to claim 5 or 9 wherein the frequency of the resonance component or the resonance frequency of the resonance phenomenon has two elements, namely, the tire's resonance frequency component of about 70 hertz in an up & down direction relative to a vehicle body at a normal air pressure of the tire and the tire's resonance frequency component of about 95 hertz in a back & forth direction relative to the vehicle body at the normal air pressure of the tire.

11. A tire air pressure estimating device according to claim 5 or 9 wherein at least one of frequencies of about 70 hertz and about 95 hertz are used as resonance-frequency criteria in estimation of a change in air pressure of the tire.

12. A tire air pressure estimating device according to claim 10 or 11 wherein a change in air pressure of the tire is estimated based on a change in resonance frequency from the frequency of about 70 hertz and/or a change in resonance frequency from the frequency of about 95 hertz.

13. A tire air pressure estimating device wherein:
a running-speed detection means (100) is provided for detecting a running speed of a vehicle;
in a low-speed and medium-speed region of the vehicle, an air pressure of a tire and/or a change in the air pressure are estimated based on a resonance phenomenon between a vibration introduced to a spring unit of the tire from the surface of a road and a vibration inherent in the spring unit of the tire; and
in a high-speed region of the vehicle, an air pressure of a tire and/or a change in the air pressure are estimated based on a resonance phenomenon between an eccentric vibration of an axle (2) and a vibration inherent in the spring unit of the tire.

14. A tire air pressure estimating device according to claim 13 wherein:
criteria for estimating an air pressure of the tire and/or a change in the air pressure in the low-speed and medium-speed region are frequencies of about 40 hertz and/or about 80 hertz; and
criteria for estimating an air pressure of the tire and/or a change in the air pressure in the high-speed region are resonance frequencies of about 70 hertz and/or about 95 hertz.

15. A tire air pressure estimating device according to claim 14 wherein:
the resonance frequency of about 70 hertz is the frequency of a resonance phenomenon of the tire in an up & down direction relative to the vehicle; and
the resonance frequency of about 95 hertz is the frequency of a resonance phenomenon of the tire in a back & forth direction relative to the vehicle.

16. A tire air pressure estimating device for estimating an air pressure of a tire and/or a change in the tire air pressure wherein a resonance phenomenon used in estimation of an air pressure of the tire in a low-speed and medium-speed region of the vehicle and a resonance phenomenon used in estimation of an air pressure of the tire in a high-speed region of the vehicle can be changed.

17. A tire air pressure estimating device for estimating a decrease in tire air pressure by extracting a signal component attributed to the tire air pressure from a signal generated by a wheel rotation sensor (50a,50b,50c,50d), the tire air pressure estimating device comprising:
an extraction means (7) for extracting a torsional component of the amplitude of an output signal generated by the wheel rotation sensor; and
a decision means (7) for determining a noise component included in the output signal due to a rotational vibration of the wheel rotation sensor itself based on the torsional component extracted by the extraction means.

18. A tire air pressure estimating device according to claim 17 wherein the extraction means (7) uses a ratio of ΔTH to ΔTL where the symbol ΔTH denotes a distance from a rising edge of any particular pulse obtained as a result of a pulse reshaping process of the output signal to a falling edge of the particular pulse and the symbol ΔTL denotes a distance from a falling edge of any specific pulse obtained as a result of the pulse reshaping process to a falling edge of a next pulse immediately following the specific pulse.

19. A tire air pressure estimating device for estimating a decrease in tire air pressure by extracting a signal component attributed to the tire air pressure from a signal generated by a wheel rotation sensor wherein:
a pair of wheel rotation sensors (55, 56) facing each other are provided on an axle housing (3) for bearing the wheel rotation sensors; and
an air pressure of a tire is estimated from a synthesis value of output signals generated by the wheel rotation sensors.

20. A tire air pressure estimating device for estimating a decrease in tire air pressure by extracting a signal component attributed to the tire air pressure from a signal generated by a wheel rotation sensor (50), the tire air pressure estimating device comprising:
a vibration detection sensor (60) for detecting a vibration of an unsprung of a vehicle;
an estimating means (21, 22, 23, 24) for estimating a noise component caused by a vibration of the wheel rotation sensor itself at the position of the wheel rotation sensor from an output signal generated by the vibration detection sensor; and
a noise correction means (30, 170) for adding the noise component estimated by the estimating means to an output signal generated by the wheel rotation sensor.

21. A tire air pressure estimating device for estimating a decrease in tire air pressure by extracting a signal component attributed to the tire air pressure from a signal generated by a wheel rotation sensor wherein an axle (2) for bearing a rotor (10) of the wheel rotation sensor (50)is magnetized in one direction.

22. A tire air pressure estimating device for indirectly estimating an air pressure of a tire from an output signal generated by a wheel rotation sensor (50) wherein:
a rotor (10) installed to face the wheel rotation sensor rotates along with an axle (2); and
a signal component of the output signal generated by the wheel rotation sensor in a radial direction of the rotor is magnified.

23. A tire air pressure estimating device according to claim 22 wherein:
the wheel rotation sensor (50) is provided with a permanent magnet (23), a coil (21)for detecting a change in magnetic flux, a yoke core (20) having a member facing the rotor (10) and a housing (24) for accommodating the permanent magnet, the coil and the yoke core; and
the coil is supported by a spring (22)in such a way that the coil is capable of vibrating in the radial direction of the rotor inside the housing.

24. A tire air pressure estimating device according to claim 22 wherein:
the wheel rotation sensor (50) is provided with a permanent magnet (23), a coil (21) for detecting a change in magnetic flux, a yoke core (20) having a member facing the rotor (10) and a housing (24) for accommodating the permanent magnet, the coil and the yoke core; and
the permanent magnet is supported by a spring (31) in such a way that the permanent magnet is capable of vibrating in the radial direction of the rotor inside the housing.

25. A tire air pressure estimating device according to claim 22, the device provided with a magnetic vibration system having a permanent magnet (23) vibrating in the radial direction of the rotor (10).

26. A method of installing a wheel rotation sensor (50) whereby the wheel rotation sensor is provided at a position in close proximity to a virtual rotational center of an axle (2) employed in a vehicle based on a phase and an amplitude at a support point for an axle housing (3) on an arm (12, 13)on a car-body side.

27. A method of installing a wheel rotation sensor according to claim 26 wherein:
two or more support points like the support point are provided; and
if phases at the support points are equal to each other, the wheel rotation sensor (50) is provided on the axle housing (3) at a point in close proximity to a line connecting the support points to each other and in close proximity to one of the support points with a larger amplitude.

28. A method of installing a wheel rotation sensor according to claim 26 wherein:
two or more support points like the support point are provided; and
if phases at the support points are opposite to each other, the wheel rotation sensor (50) is provided on the axle housing (3) at a point in close proximity to a line connecting the support points to each other and in close proximity to a middle point between the support points.

29. A method of installing a wheel rotation sensor according to claim 26 wherein:
two or more support points like the support point are provided; and
if phases at the support points are equal to each other and amplitudes at the support points are equal to each other, the wheel rotation sensor (50) is provided on the axle housing (3) at a point in close proximity to a line connecting the support points to each other and in close proximity to one of the support points with a larger amplitude.

30. A method of installing a wheel rotation sensor according to claim 26 wherein:
two or more support points like the support point are provided; and
if phases at the support points are opposite to each other and amplitudes at the support points are equal to each other, the wheel rotation sensor (50) is provided at a position in close proximity to the axle housing (3) and in closest proximity to a specific point on a line connecting the support points to each other with the position of the specific point on the line determined by a ratio of an amplitude at a particular one of the support points to an amplitude at another one of the support points.

31. A method of installing a wheel rotation sensor according to claim 26 wherein:
two or more support points like the support point are provided; and
if a difference in phase between the support points is in the range 0 degrees to 90 degrees, the wheel rotation sensor (50) is provided on the axle housing (3) at a point in close proximity to one of the support points with a smaller amplitude.

32. A method of installing a wheel rotation sensor according to claim 26 wherein:
two or more support points like the support point are provided; and
if a difference in phase between the support points is in the range 90 degrees to 180 degrees, the wheel rotation sensor is provided at a position in close proximity to the axle housing on a normal line perpendicularly crossing a link line connecting the support points to each other at a specific point determined by a ratio of an amplitude at a particular one of the support points to an amplitude at another one of the support points.

33. A tire air pressure estimating device for detecting a drop in tire air pressure by extracting a signal component attributed to the tire air pressure of a vehicle from an output signal generated by a wheel rotation sensor (50), the tire air pressure estimating device comprising:
a detection means (99) for detecting a vibration of a driving system of the vehicle;
an identification means (7) for identifying the vibration of the driving system included in the output signal generated by the wheel rotation sensor based on a detection signal output by the detection sensor; and
an estimating means (7) for estimating a tire air pressure based on the vibration identified by the identification means and output signal generated by the wheel rotation sensor.

34. A tire air pressure estimating device according to claim 33 wherein the detection sensor is an acceleration sensor (99) provided at a position in close proximity to the driving system.

35. A tire air pressure estimating device according to claim 34 wherein the acceleration sensor is an acceleration sensor (99) used in a device having a function other than a function of the tire air pressure estimating device.

36. A tire air pressure estimating device according to any one of claims 33 to 35 wherein the estimating means estimates an air pressure of a tire based on a resonance-frequency component attributed to a spring constant of the tire and included in the output signal generated by the wheel rotation sensor.

37. A tire air pressure estimating device according to any one of claims 33 to 36 wherein the identification means (7) identifies a vibration including a windup vibration of a suspension employed in the driving system.

38. A tire air pressure estimating device according to any one of claims 33 to 37 wherein the identification means (7) identifies a vibration including a primary bending vibration of a housing of the driving system.

39. A tire air pressure estimating device according to any one of claims 33 to 38 wherein the identification means (7) identifies a vibration including a torsional vibration of a propeller shaft employed in the driving system.
